# NEW EUROPEAN PATENT SPECIFICATION

(11) **EP 1 240 779 B2**
(45) Date of publication and mention of the opposition decision: **22.10.2008**
(45) Mention of the grant of the patent: 17.03.2004
(21) Application number: 00984036.4
(22) Date of filing: 08.12.2000
(51) Int. Cl.: H04N 7/173, H04N 5/00, H04N 5/445

(54) **FEATURES FOR USE WITH ADVANCED SET-TOP APPLICATIONS ON INTERACTIVE TELEVISION SYSTEMS**
SET-TOP ANWENDUNGEN F?R INTERAKTIVE FERNSEHSYSTEME
FONCTIONS POUVANT ETRE UTILISEES AVEC DES APPLICATIONS DE DECODAGE EVOLUEES SUR DES SYSTEMES TELEVISUELS INTERACTIFS

(30) Priority: 10.12.1999 US 170223 P; 01.05.2000 US 200930 P
(43) Date of publication of application: 18.09.2002
(60) Divisional application: 04075453.3
(73) Proprietor: United Video Properties, Inc., Tulsa, OK 74136 (US)
(72) Inventor: CARPENTER, Kenneth, F., Jr., Mount Laurel, NJ 08054 (US); KNEE, Robert, A., Lansdale, PA 19446 (US); HERRINGTON, W., Benjamin, Tulsa, OK 74107 (US); ELLIS, Michael, D., Boulder, CO 80304 (US)
(74) Representative: Hale, Peter
(86) International application number: PCT/US2000/033259
(87) International publication number: WO 2001/043424

(56) References cited:
- WO-A-97/42763
- WO-A-99/04561
- WO-A-99/14947
- Funkschau 25/95, 5-44, "Interaktiver Programmführer"

## Description

### Background of the Invention

This invention relates to interactive television systems and more particularly, to interactive television systems that provide advanced set-top applications.

Modern set-top boxes are being developed with advanced processing circuitry and sufficient memory to support new types of software applications not previously envisioned. A challenge created by new types of interactive software applications is the ability to offer advanced features consistently with users' expectations of a set-top box-based environment. Advanced set-top applications may provide features that are as complex and sophisticated as features users expect from their personal computer-based applications, but personal computer-based applications and set-top box-based applications have differences in, for example, their user interfaces and persistent storage capabilities that require different programming paradigms. For example, users of set-top box-based applications input information using a remote control having a limited keyset, rather than a full keyboard as with computer-based approaches. While set-top boxes may be designed to use a mouse and keyboard, such devices may be clumsy and difficult to use in a dark television-watching environment.

Television-based applications and personal computer-based applications draw users' attentions to display elements differently. On a computer-based application, a user can navigate to an active area on the screen by positioning a mouse cursor over a display item. The mouse cursor moves along the screen as the user moves the mouse, allowing the user to follow his or her navigation to the display item: Set-top box-based applications typically have highlight regions that jump between active areas in response to a user pressing a direction key on a remote control. Users are accustomed to anticipating where the highlight region is going to appear.

Operating systems such as Microsoft Windows have familiarized personal computer users with running multiple applications simultaneously ("multitasking"). Multitasking is not prevalent in set-top box-based environments, and it would be desirable to provide a multitasking solution that provides multiple applications consistent with a user's expectation of a set-top box-based environment.

It is therefore an object of the present invention to provide enhanced features and applications for a set-top box-based environment.

### Summary of the Invention

The invention is as set out in method claim 1 and system claim 16.

This and other objects of the invention are accomplished in accordance with the principles of the present invention by providing advanced set-top applications and features in a set-top boxed-based environment in which multiple interactive television applications are provided.

Some embodiments of the present invention may provide users with opportunities to launch and navigate between multiple applications or other resources. An inter-resource "back" function may be provided that allows users to return from one application, display, web site, feature, channel or other resource, to a previous application, display, web site, feature, channel or other resource.

### Brief Description of the Drawings

The above and other objects and advantages of the invention will be apparent upon consideration of the following detailed description, taken in conjunction with the accompanying drawings, in which like reference characters refer to like parts throughout, in which:
FIG. 1 is a block diagram of an interactive television system in which advanced set-top box-based applications may be implemented in accordance with one embodiment of the present invention.
FIG. 2 is a block diagram of the user television equipment of FIG. 1 in accordance with one embodiment of the present invention.
FIG. 3 is a more generalized illustrative block diagram of the user television equipment of FIG. 1 in accordance with one embodiment of the present invention.
FIG. 4 is an illustrative remote control in accordance with one embodiment of the present invention.
FIG. 5 is a block diagram illustrating how an interactive television program guide application may support a plurality of other set-top box-based applications in accordance with one embodiment of the present invention.
FIG. 6 is a block diagram illustrating how an operating system may support a plurality of other set-top box-based applications in accordance with one embodiment of the present invention.
FIG. 7 is an illustrative initial interactive program guide display in accordance with one embodiment of the present invention.
FIG. 8 is an illustrative program listings display in accordance with one embodiment of the present invention.
FIG. 9 is an illustrative program information display in accordance with one embodiment of the present invention.
FIG. 10 is an illustrative set reminder display in accordance with one embodiment of the present invention.
FIGS. 11, 12 and 13 are illustrative operating system displays in accordance with one embodiment of the present invention.
FIGS. 14 shows an illustrative program guide introductory display in accordance with one embodiment of the present invention.
FIG. 15 shows an illustrative features overlay in accordance with one embodiment of the present invention.
FIG. 16 is an illustrative program listings display for movie listings in accordance with one embodiment of the present invention.
FIG. 17 is an illustrative interactive services display in accordance with one embodiment of the present invention.
FIG. 18 is an illustrative is an illustrative interactive service types display in accordance with one embodiment of the present invention.
FIG. 19 is an illustrative service sub-type display in accordance with one embodiment of the present invention.
FIG. 20 is an illustrative interactive service display for a sports service in accordance with one embodiment of the present invention.
FIG. 21 is an illustrative confirmatory display for reminders in accordance with one embodiment of the present invention.
FIG. 22 is an illustrative customer service feature display in accordance with one embodiment of the present invention.
FIG. 23 is an illustrative email display in accordance with one embodiment of the present invention.
FIG. 24 is an illustrative Internet access display in accordance with one embodiment of the present invention.
FIG. 25 is an illustrative extras overlay in accordance with one embodiment of the present invention.
FIG. 26 is an illustrative history display in accordance with one embodiment of the present invention.
FIG. 27 shows an illustrative reminder overlay in accordance with one embodiment of the present invention.
FIG. 28 is an illustrative favorites display in accordance with one embodiment of the present invention.
FIG. 29 is an illustrative user display in accordance with one embodiment of the present invention.
FIG. 30 is an illustrative password display in accordance with one embodiment of the present invention.
FIG. 31 is an illustrative user profile display in accordance with one embodiment of the present invention.
FIG. 32 shows an illustrative resource display in accordance with one embodiment of the present invention.
FIG. 33 shows an illustrative parental control display in accordance with one embodiment of the present invention.
FIG. 34 shows search target display in accordance with one embodiment of the present invention.
FIG. 35 shows an illustrative search display in accordance with one embodiment of the present invention.
FIG. 36 is a flowchart of illustrative steps involved in providing an inter-resource features in accordance with one embodiment of the present invention.
FIG. 37 is a flowchart of illustrative steps involved in providing inter-resource back, forward, and history features in accordance with one embodiment of the present invention.
FIG. 38 is a flowchart of illustrative steps involved in providing an inter-resource reminder feature in accordance with one embodiment of the present invention.
FIG. 39 is a flowchart of illustrative steps involved in providing an inter-resource favorites feature in accordance with one embodiment of the present invention.
FIGS. 40a and 40b are flowcharts of illustrative steps involved in providing inter-resource parental control features in accordance with one embodiment of the present invention.
FIG. 41 is a flowchart of illustrative steps involved in providing an extras feature in accordance with one embodiment of the present invention.
FIG. 42 is a flowchart of illustrative steps involved in providing an inter-resource search feature in accordance with one embodiment of the present invention.

### Detailed Description of the Preferred Embodiments

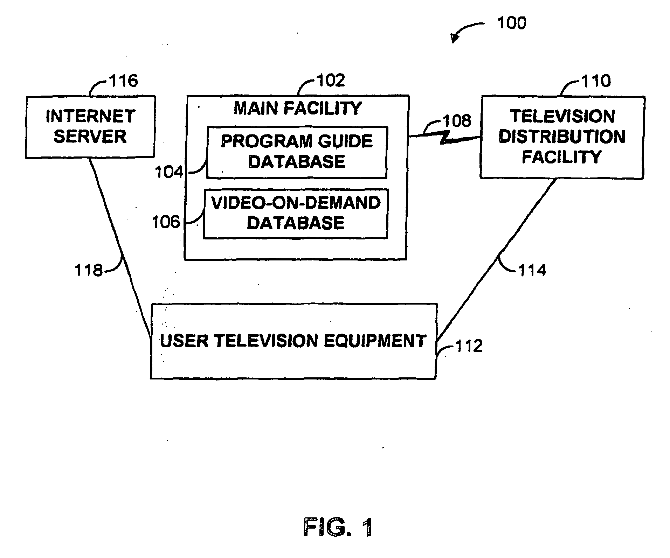

An illustrative interactive television system 100 in which advanced set-top applications may be implemented in accordance with the present invention is shown in FIG. 1. The advanced set-top applications and features of the present invention may be provided in system 100 in which application data is distributed from one or more main facilities 102 to an interactive television application, implemented at least partially on user television equipment 112, via a television distribution facility 110. The interactive television application may be any application suitable for a television-based environment, including, for example, interactive program guides, video-on-demand applications, home shopping applications, or other suitable applications. Other suitable systems may involve the distribution of data to an interactive television application implemented on user television equipment 112 using other suitable distribution schemes, such as schemes involving data transmission over the Internet or the like. If desired, interactive television applications may be implemented using a client-server architecture in which part of the processing power for an application is provided by a server located at, for example, a television distribution facility 110 or a main facility 102 and user television equipment 112 acts as a client processor. Some embodiments may include both client-server and stand-alone based applications (e.g., a program guide may be stand-alone and other applications may be client-server based). For purposes of clarity, and not by way of limitation, the following embodiments of the present invention will be described using non-client-server based approaches.

Main facility 102 may include a program guide database 104 for storing program guide information (e.g., television program listings data, program-related information, channel listings data, channel-related information, network listings data, network-related information, package listings data, package-related information, pay-per-view ordering information, television program promotional information, program guide Internet-related information, etc.). Main facility 102 may also include a video-on-demand database 106 for storing video-on-demand information. Databases 104 and 106 may be combined into a single database if desired. Main facility 102 may also provide data for other applications implemented at least in part on user television equipment 112. For example, main facility 102 may provide data for home shopping applications, information services, or other applications. In some embodiments, there may be multiple main facilities servicing a number of applications. Each main facility may serve one or more applications.

Main facility 102 may include any suitable computer-based system for generating information, receiving information, storing information, or otherwise managing information in databases 104 and 106. Main facility 102 may also manage information for other purposes, such as for other interactive applications. Main facility 102 may include equipment suitable for transmitting information from program guide database 104 and video-on-demand database 106, and other information (e.g., other application data) through communications link 108 to television distribution facility 110. In practice, main facility 102 may transmit information in parallel to multiple television distribution facilities, but only one television distribution facility has been shown to avoid over-complicating the drawing. In some embodiments, main facility 102 may transmit information to other types of distribution facilities such as, for example, Internet servers for websites.

Communications link 108 may be a satellite link, a telephone network link, an Internet link, a fiber-optic link, another suitable communications link, or a combination of such communications links. Text, graphics, video, data, or any other suitable content may be transmitted by main facility 102 over communications link 108. If it is desired to transmit video signals over communications link 108, a relatively high bandwidth link such as a satellite link may be preferable to a relatively low bandwidth link. Television distribution facility 110 may be any facility suitable for distributing television signals to viewers, such as a cable system headend, a broadcast distribution facility, or a satellite television distribution facility.

The information transmitted by main facility 102 to television distribution facility 110 may include, for example, video-on-demand listings data and television program listings data such as program times, channels, titles, descriptions, or other suitable information. For purposes of clarity, any suitable combination of program guide information, video-on-demand information, or any other suitable information may sometimes be referred to herein generically as "information." Transmitted information may include, for example, pay program data such as pricing information for individual programs and subscription channels, time windows for ordering programs and channels, telephone numbers for placing orders that may be placed over the telephone, etc. Transmitted information may also include a detailed description of program guide television content such as movie reviews, ratings, network affiliation, associated services, program director, cast, channel call letters, full channel name, air times, service description, logo, package title, package components, web links, e-mail information, chat information, video previews, merchandise information, still graphics, video, advertisements, etc. Television distribution facility 110 may include equipment for accessing data and communicating on the Internet.

Television distribution facility 110 may distribute information received from main facilities, such as one or more main facilities 102, to user television equipment 112 via communications path 114. User television equipment 112 may be any suitable television equipment that contains sufficient processing capabilities to implement interactive television applications and features in accordance with the present invention.

Communications path 114 may be a cable link, fiber-optic link, satellite link, broadcast link, another suitable link, or a combination of such links. Any suitable communications scheme may be used to transmit data over communications path 114, including in-band transmissions, out-of-band transmissions, digital transmissions, analog transmissions, cable transmissions, satellite transmissions, over-the-air transmissions, multi-channel multi-point distribution services (MMDS) transmissions, data-over-cable service interface specification (DOCSIS) transmissions, or any other suitable communications scheme.

Communications path 114 preferably has sufficient bandwidth to allow television distribution facility 110 to distribute television programming, program guide information, video-on-demand information, advertisements, and other information to user television equipment 112. Multiple television and audio channels (analog, digital, or both analog and digital) may be provided to user television equipment 112 via communications paths 114. If desired, some of the data may be distributed to user television equipment 112 by one or more distribution facilities that are separate from television distribution facility 110 using communications paths that are partly or completely separate from communications path 114.

The data distribution technique used to distribute data on communications path 114 may depend on the type of information that is being distributed. For example, text and graphics may be distributed over an out-of-band channel using an out-of-band modulator or distributed in the vertical blanking interval (VBI) lines of an analog video channel. Video information may also be distributed in this way, although large quantities of video information may be more efficiently distributed using one or more digital channels on communications path 114. Such digital channels may also be used for distributing text and graphics.

Programming information from an Internet server 116 may also be transmitted to user television equipment 112 via a communications path 118. Communications path 118 may be a dial-up telephone line, cable link, fiber-optic link, satellite link, broadcast link, another suitable link, or a combination of such links. In some embodiments, Internet server 116 may be connected to main facility 102 via a communications path suitable for exchanging program guide, video-on-demand, or other information with main facility 102.

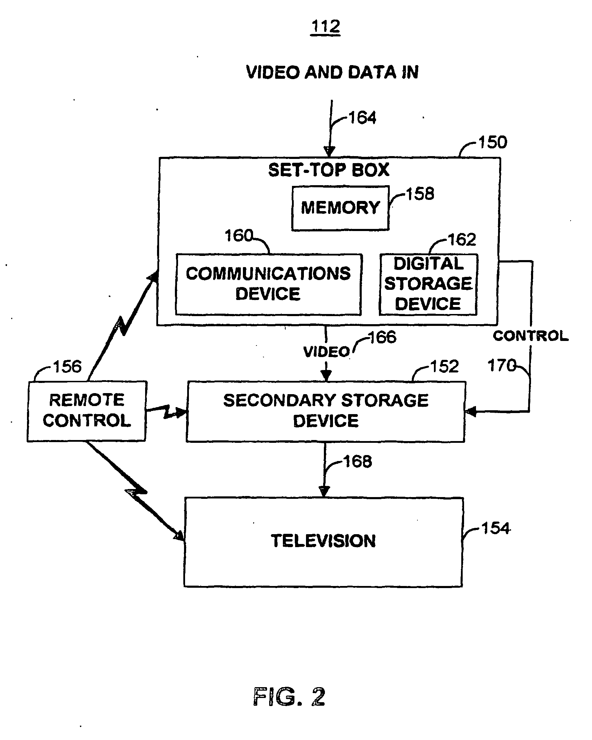

An illustrative arrangement for user television equipment 112 is shown in FIG. 2. User television equipment 112 may receive television programming and data from television distribution facility 110 (FIG. 1), Internet server 116 (FIG. 1), some other system or distribution facility, or a combination thereof, at interface 164. During normal television viewing, a user may tune set-top box 150 to a desired television channel. The signal for that television channel may then be provided at video output 166 to a television 154. The signal supplied at output 166 may be a radio-frequency (RF) signal on a predefined channel (e.g., channel 3 or 4) an analog demodulated video signal, a digital signal provided on an appropriate digital bus (e.g., a bus using the Institute of Electrical and Electronics Engineers (IEEE) 1394 standard), or any other suitable signal. The video signal at output 166 may be received by optional secondary storage device 152.

Interactive applications may run on set-top box 150, on television 154 (if television 154 has suitable processing circuitry and memory), on a suitable analog or digital receiver connected to television 154, on a secondary storage device 152 (if secondary storage device 152 has suitable processing circuitry and memory), or on any other suitable device. Interactive applications may also run cooperatively on a suitable combination of these devices. For example, interactive television program guide systems in which a cooperative interactive television program guide runs on multiple devices are described in Ellis U.S. patent application Serial No. 09/186,598, filed November 5, 1998, which is hereby incorporated by reference herein in its entirety.

Secondary storage device 152 can be any suitable type of analog or digital storage device or player (e.g., a videocassette recorder, a digital versatile disc (DVD) player, etc.). Program recording and other features may be controlled by set-top box 150 using control path 170. If secondary storage device 152 is a videocassette recorder, for example, a typical control path 170 may involve the use of an infrared transmitter coupled to the infrared receiver in the videocassette recorder that normally accepts commands from a remote control such as a remote control 156. Remote control 156 may be used to control set-top box 150, secondary storage device 152, and television 154.

If desired, a user may record programs, application data or a combination thereof in digital form on an optional digital storage device 162.
Digital storage device 162 may be a writeable optical storage device (such as a DVD player capable of handling recordable DVD discs), a magnetic storage device (such as a disk drive or digital tape), or any other digital storage device. For example, interactive television program guide systems that have digital storage devices are described in Hassell et al. U.S. patent application Serial No. 09/157,256, filed September 17, 1998, which is hereby incorporated by reference herein in its entirety.

Digital storage device 162 may be contained in set-top box 150 or may be external to set-top box 150 via an output port and appropriate interface. If necessary, processing circuitry in set-top box 150 may format the received video, audio and data signals into a digital file format. The file format may be an open file format such as the Moving Picture Experts Group (MPEG) MPEG-2 standard or the Moving Joint Photographic Experts Group (MJPEG) standard. The resulting data may be streamed to digital storage device 162 via an appropriate bus (e.g., a bus using the Institute Electrical and Electronics Engineers (IEEE) 1394 standard), and then stored on digital storage device 162. In another suitable approach, an MPEG-2 data stream or series of files may be received from television distribution facility 110 (FIG. 1) and stored.

Television 154 may receive video signals from secondary storage device 152 via communications path 168. The video signals on communications path 168 may be generated by secondary storage device 152 when playing back a prerecorded storage medium (e.g., a videocassette or a recordable digital video disc), may be generated by digital storage device 162 when playing back a recorded digital medium, may be passed through from set-top box 150, may be provided directly to television 154 from set-top box 150 if secondary storage device 152 is not included in user television equipment 112, or may be received directly by television 154. During normal television viewing, the video signals provided to television 154 correspond to the desired channel to which a user has tuned with set-top box 150. Video signals may also be provided to television 154 by set-top box 150 when set-top box 150 is used to play back information stored on digital storage device 162.

Set-top box 150 may have memory 158. Memory 158 may be any memory or other storage device, such as a random access memory (RAM), read only memory (ROM), flash memory, a hard disk drive, a combination of such devices, etc., that is suitable for storing application code and data.

Set-top box 150 may include a communications device 160 for communicating with television distribution facility 110 (FIG. 1), Internet server 116 (FIG. 1), other facilities, or a combination thereof, via interfaces 164 over communications paths 114 and 118 (FIG. 1). Communications device 160 may be one or more modems (e.g., any suitable analog or digital standard, cellular, or cable modem), network interface cards (e.g., an Ethernet card, Token ring card, etc.), or other suitable communications devices. Television 154 may also incorporate such a suitable communications device if desired.

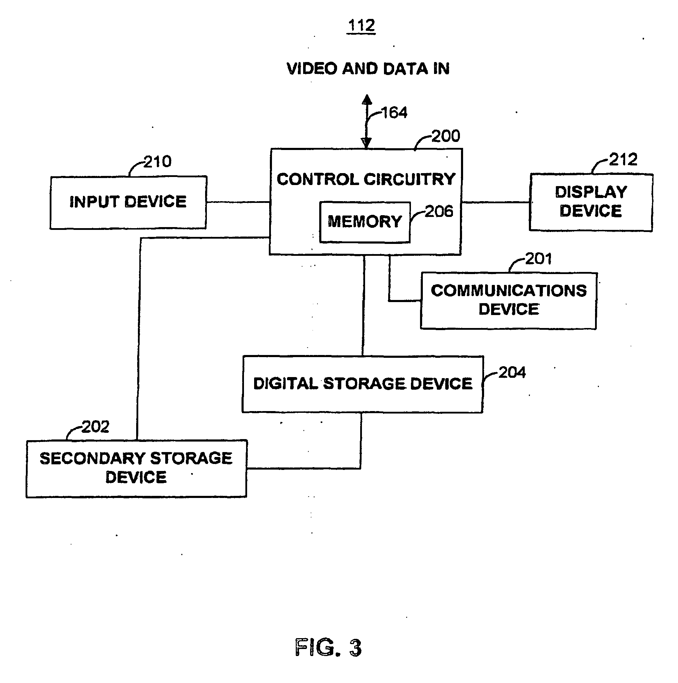

A more generalized embodiment of user television equipment 112 of FIG. 2 is shown in FIG. 3. As shown in FIG. 3, information may be received by control circuitry 200 of the user television equipment. The functions of control circuitry 200 may be similar to those provided by the set-top box arrangement of FIG. 2.

User television equipment 112 may also include a secondary storage device 202 and/or a digital storage device 204 for recording programming.
Secondary storage device 202 may be any suitable type of analog or digital program storage device (e.g., a videocassette recorder, a digital versatile disc (DVD), etc.). Program recording and other features may be controlled by control circuitry 200. Digital storage device 204 may be, for example, a writeable optical storage device (such as a DVD recorder), a magnetic storage device (such as a disk drive or digital tape), or any other digital storage device.

User television equipment 112 may also include memory 206. Memory 206 may be any memory or other storage device, such as a random access memory (RAM), read only memory (ROM), flash memory, a hard disk drive, a combination of such devices, etc., that is suitable for storing instructions and data.

User television equipment 112 may also include a communications device 201 for supporting communications between a program guide, an operating system, or another set-top box-based application, and television distribution facility 110, Internet server 116 (FIG. 1), other suitable facilities, or a combination thereof, via interfaces 164 over communications paths 114 and 118 (FIG. 1). Communications device 201 may be one or more modems (e.g., any suitable analog or digital standard, cellular, or cable modem), network interface card (e.g., an Ethernet card, Token ring card, etc.), or other suitable communications device.

In some embodiments, user television equipment 112 may include multiple communications devices 201, which may be of different types. For example, one or more communications devices 201 may be an integrated cable modem for supporting Internet channels. One or more communications devices 201 may be receivers or tuners for in-band data paths. While user television equipment 112 is tuned to a television channel, data, which may be related or unrelated to the television channel, may be sent along with the audio and video of the channel. For analog television, the data may be sent in the video vertical-blanking interval (VBI). For digital television, the data may be sent as a separate digital data stream in the same analog carrier. One or more communications devices may be receivers for out-of-band data paths. For example, a receiver or tuner may be dedicated to continuously receiving out of band data from an out-of-band data channel. The channel may continuously provide data, regardless of the status of the other resources of user television equipment 112. One or more communications devices 201 may be modems for telephone dial-up links.

Applications running on user television equipment 112 may use one communications device 201 for one type of data, and another communications device 201 for another type of data. In another suitable approach, the same type of data may be acquired over multiple data paths depending on, for example, user requests, availability of system resources, system failures, or any other suitable event. For example, a program guide may acquire most of its schedule data over an out-of-band data path. The guide may augment that data using in-band data, an Internet connection, or both. Similarly, any application may receive data via an in-band or out-of-band path, and supplement that data via an Internet path.

Some applications may be resident in user television equipment 112. Others may be acquired, for example over an Internet link or via an in-band channel. In some embodiments, applications that are resident in user television equipment 112 may be optimized based on the amount of storage required to maintain them, and applications acquired in real-time may be optimized based on the ability to acquire them in a reasonable period of time.

User television equipment 112 may also include a user input device 210 which may be, for example, a wireless keyboard, mouse, trackball, dedicated set of keys, voice recognition system, personal digital assistant (PDA), display remote, or other suitable input device. When a PDA or display remote is included, the support application may provide data to the device which can be used to generate displays appropriate to the supported application in use. A PDA or display remote may include a touch pad for receiving user input. For example, a user may select options by touching specific active options on the display screen of the remote. Program guide systems with display remotes are described in United States patent application No. 09/588,823, filed June 7, 2000, which is incorporated herein in its entirety.

User television equipment 112 may also include a display device 212 which may be any suitable television, monitor, or other suitable display device.

In some embodiments of the present invention, advanced set-top box-based features may be implemented using a central function library, dynamically linked library (DLL), or other software construct. For example, one or more applications, such as an interactive program guide, operating system, or other application, may provide code and resources for advanced set-top box-based features. These applications, one or more of which may sometimes be referred to herein as a "support application," may provide advanced features to other applications (one or more of which may sometimes be referred to herein as a "supported application") using an application programming interface (API). The supported applications may be programmed to call API function calls that invoke processes performed by the support application. In another suitable approach, code for advanced features may be stored as DLLs in memory 206. Supported applications may dynamically link with the DLL code during run-time. Any other suitable approach to provide features across multiple set-top box-based applications may be used.

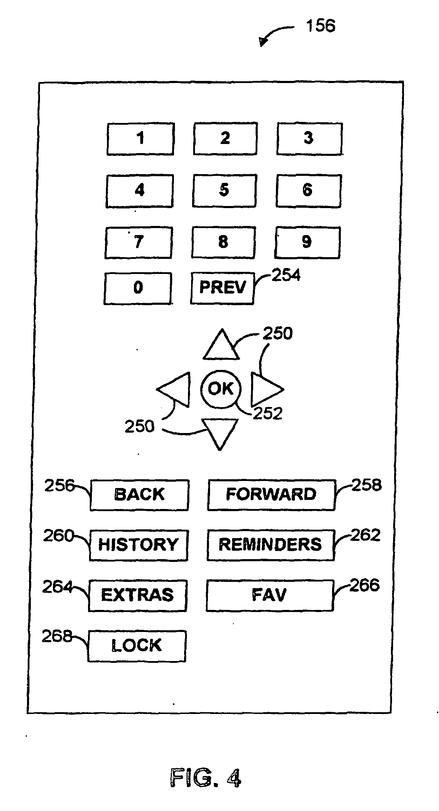

An illustrative embodiment of a remote control 156 of FIG. 2 is shown in FIG. 4. As illustrated, remote control 156 may include arrow keys 250 for controlling the position of a highlight region in an application display screen, and a data entry key 252 such as an OK, ENTER, or ACCEPT key (hereinafter "OK key 252"). Remote control 156 may also include a PREV key 254 in order to display the previous channel, a BACK key 256, a FORWARD key 258, a HISTORY key 260, a REMINDERS key 262, an EXTRAS key 264, a FAV key 266, and a LOCK key 268 to facilitate access to a variety of advanced set-top box-based features. Remote control 156 may also have other remote control keys such as a menu key, a guide key, an exit key, an information ("INFO") key, a record key, channel up or down keys, volume control keys, and/or numeric keys for traditional set-top box-based features.

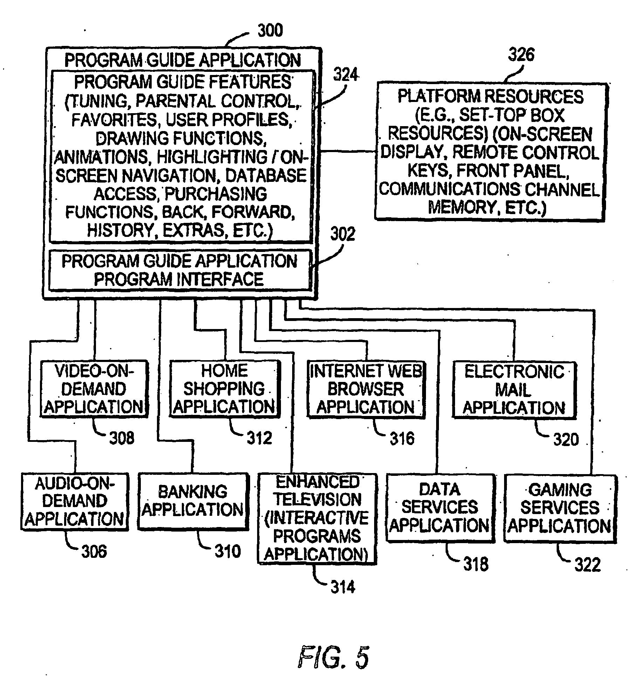

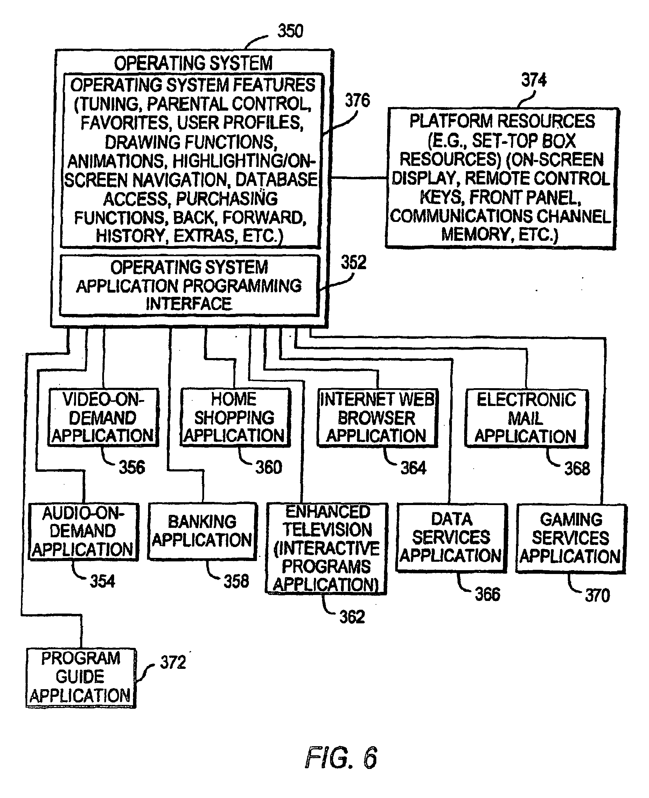

FIGS. 5 and 6 show two illustrative embodiments of the present invention in which a program guide application 300 and an operating system 350, respectively, having associated APIs 302 and 352, act as support applications to provide advanced set-top box-based features for use by illustrative supported applications. These two support applications are only illustrative, and any other suitable support application may be used. In some embodiments, the support application may, for example, run on top of an operating system. In FIG. 5, program guide application 300 supports, for example, audio-on-demand application 306, video-on-demand application 308, home banking application 310, home shopping application 312, enhanced television application 314, Internet web browser application 316, data services application 318, electronic mail application 320, and gaming services application 322. This list of supported applications is only illustrative, as any other suitable applications may be supported. Although depicted as being a part of program guide application 300 for purposes of illustration, programming guide API 302 may be considered to be either a part of program guide application 300 or separate from program guide application 300 yet associated with program guide application 300. Program guide API 302 may be implemented, for example, partially on user television equipment 112 (FIG. 1) and partially on a server, such as a server within television distribution facility 110 (FIG. 1), or may be implemented entirely on user television equipment 112. Interactive program guide systems that support non-program guide applications are described, for example, in Ellis et al. U.S. patent application Serial No. 09/145,232, filed September 1, 1998, which is hereby incorporated by reference herein in its entirety.

Program guide API 302 may include functions that allow supported applications to access platform resources 326 such as on-screen display features (colors, fonts, animations, dimming, etc.), remote control keys (key assignments and the like), front panel resources (which determine, e.g., the functions assigned to various dedicated buttons on user television equipment 112 (FIG. 1)), communications channel resources (e.g., features related to how set-top box 150 (FIG. 2) sends and receives data), and server resources in client-server based approaches. Program guides that provide applications with access to program guide features and platform resources using APIs are described, for example, in Ellis et al. U.S. patent application Serial No. 09/346,134, filed July 16, 1999, which is hereby incorporated by reference herein in its entirety.

Program guide API 302 may include functions that allow supported applications to access program guide features 324 such as tuning (changing applications, displays, features, web sites, channels or other resources), parental control (features related to placing a password lock on certain applications, displays, web sites, features or other resources), favorites (e.g., user-designated favorite applications, displays, web sites, features or other resources), user profiles (e.g., favorites and settings profiles for various users of a given set-top box), drawing functions, animations, highlighting and on-screen navigation, database access (e.g., access to databases of application information stored in memory in set-top box 150 (FIG. 2) and periodically or continually supplied with data from one or more main facilities 102 (FIG. 1), or other facilities), purchasing functions (e.g., for impulse ordering pay-per-view events), options on program guide displays, or any other suitable features. Program guide features 324 may also enable a supported application to access enhanced set-top box-based features, such as back, forward, history and extras.

As shown in FIG. 6, operating system API 352 may provide enhanced set-top box-based features to supported applications such as audio-on-demand application 354, video-on-demand application 356, home banking application 358, home shopping application 360, enhanced television application 362, Internet web browser application 364, data services application 366, electronic mail application 368, gaming services application 370 and program guide application 372.
This list of supported applications is only illustrative, as any other suitable application may be supported. Although depicted as being a part of navigation shell 350 for purposes of illustration, operating system API 352 may be considered to be either a part of operating system 350 or separate from operating system 350 yet associated with it. Operating system API 352 may be implemented, for example, partially on user television equipment 112 (FIG. 1) and partially on a server, such as a server within television distribution facility 110 (FIG. 1), or may be implemented entirely on user television equipment 112.

Operating system API 352 may include functions that allow supported applications to access platform resources 374 such as on-screen display features (colors, fonts, etc.), remote control keys (key assignments and the like), front panel resources (which determine, e.g., the functions assigned to various dedicated buttons on user television equipment 112 (FIG. 1)), communications channel resources (e.g., features related to how set-top box 150 (FIG. 2) sends and receives data), and server resources.

Operating system API 352 may include functions that allow supported applications to access operating system features 376, such as, for example, tuning (how to change set-top box channels, web site applications or other resources), parental control (features related to placing a password lock on various applications, displays, features, channels or other resources), favorites (e.g., user-designated favorite applications, displays, features, web sites, channels or other resources), user profiles (e.g., favorites and settings profiles for various users of a given set-top box), drawing functions, highlighting animations, on-screen navigation, database access (e.g., to a database of application information stored in memory in set-top box 150 (FIG. 2) and periodically or continually supplied with data from one or more main facilities 102 (FIG. 1)), purchasing functions (e.g., for impulse ordering pay-per-view events), options on displays, or any other suitable feature.

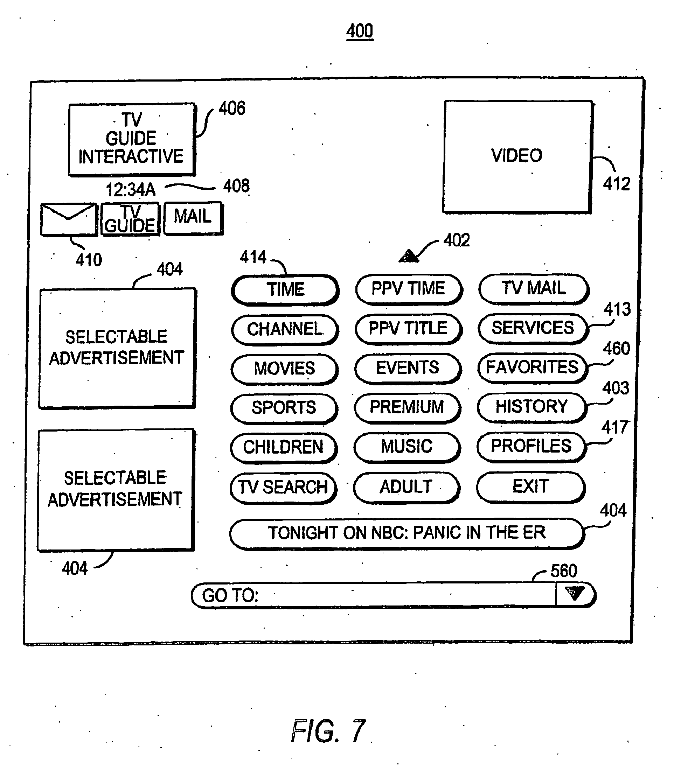

FIG. 7 shows an illustrative initial interactive program guide display 400. In some embodiments, display 400 may be provided by a program guide running as a support application. In other embodiments, display 400 may be provided by a program guide running as a supported application. A user may access display 400 by, for example, pressing a "guide" key on remote control 156 (FIG. 4). As shown, display 400 may contain, for example, a menu 402 of selectable program guide features, one or more selectable advertisements 404, a cable operator or sponsor brand graphic 406, the current time 408, a mail-available indicator 410, and a program-in-guide window 412. The user may indicate a desire to select program guide features from menu 402 by, for example, moving a highlight region 414 to highlight the desired feature and pressing an "OK" key 252 on a remote control 156.

In some embodiments, the program guide may provide go to feature 560 that allow users to specify web sites, features, applications or other resources that the user wishes to access. If desired, go to feature 560 may be provided by other support applications, such as an operating system, or accessed from supported applications. The user may indicate a desired resource by, for example, selecting go to feature 560 and entering a resource name, selecting a resource from a drop-down selectable list of resource names (as shown), or using any other suitable approach. In embodiments where a program guide is the support application, the program guide may, in response to the user identifying a resource, provide a display having the identified resource. In some embodiments, the program guide (or other support application) may dynamically fill go to feature 560 with the name of the currently accessed display, feature, web site or other resource. Go to feature 560 may then allow users to access a history of their recently accessed resources. In some embodiments, go to feature 560 may be a drop-down list of selectable resources.

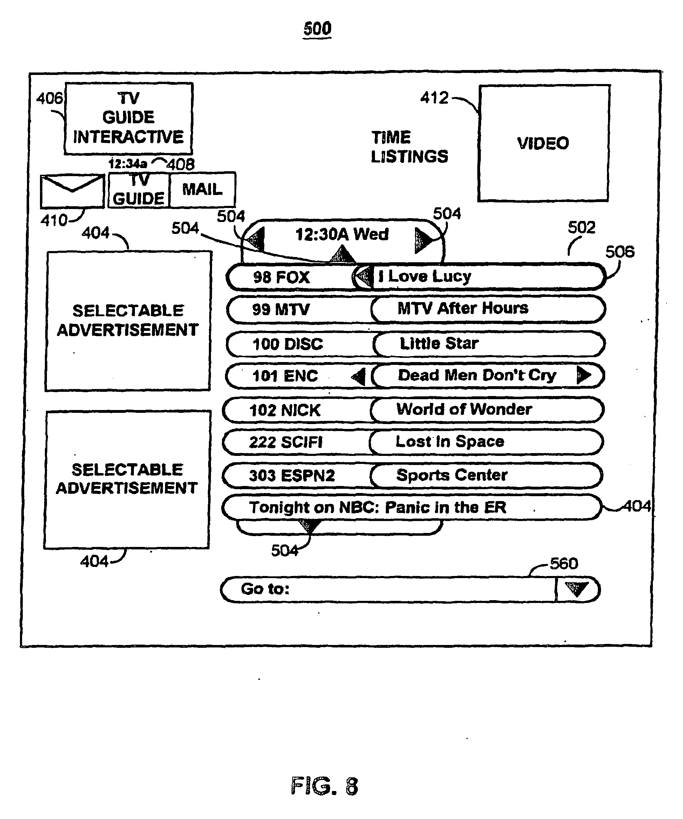

FIG. 8 shows an illustrative program guide display 500 in which television program listings 502 are listed by time. If desired, the program guide may list programs in other formats. Programs may, for example, be sorted by channel. Programs may also be sorted by themes, such as children's programming, sports, movies, adult, or other suitable themes. Display 500 may be generated by a program guide for display in response to a user indicating a desire to view program listings by, for example, pressing a suitable button on a remote control 156, or by selecting "TIME" from menu 402 of FIG. 7. Program listings 502 may be presented in a scrollable list, and may display the channel number, call letters, and logo for each of the programs listed. Program listings 502 may be for a given time slot. The program guide may provide the user with the opportunity to change the current time slot by, for example, pressing "right" and "left" arrows on a remote control 156. The program guide may highlight on-screen arrows 504 to indicate to a user that an arrow key has been pressed. Like display 400, display 500 may also have a number of graphics, selectable ads, and a video window for displaying a television program.

The program guide may allow a user to scroll through the program listings by, for example, pressing "up" and "down" arrows keys 250 on remote control 156 (FIG. 4). A stationary highlight region 506 may be provided within program listings 502 (e.g., at the top). In response to depressions of the arrow keys, the program listings may then be shifted up or down relative to the highlight region. Alternatively, highlight region 506 may be repositioned within listings 502 without requiring movement of the listings.

A program guide, whether a support or supported application, may provide users with opportunities to view information about programs and to access related features from within program information screens. Systems in which program guides provide users with opportunities to access program guide features from within information screens are described, for example, in Rudnick et al. U.S. patent application Serial No. 09/356,268, filed July 16, 1999, which is hereby incorporated by reference herein in its entirety. Program information screens may include, for example, a brief description of a program, the actors of a program, the rating of a program, when a program is aired, or any other suitable information related to a program. The program guide may display a program information screen when a user indicates a desire to view program information by, for example, pressing an "info" key on remote control 156 (FIG. 4) while watching a program or after selecting its listing, by selecting a selectable advertisement that promotes a program for which program information is available, or using any other suitable approach.

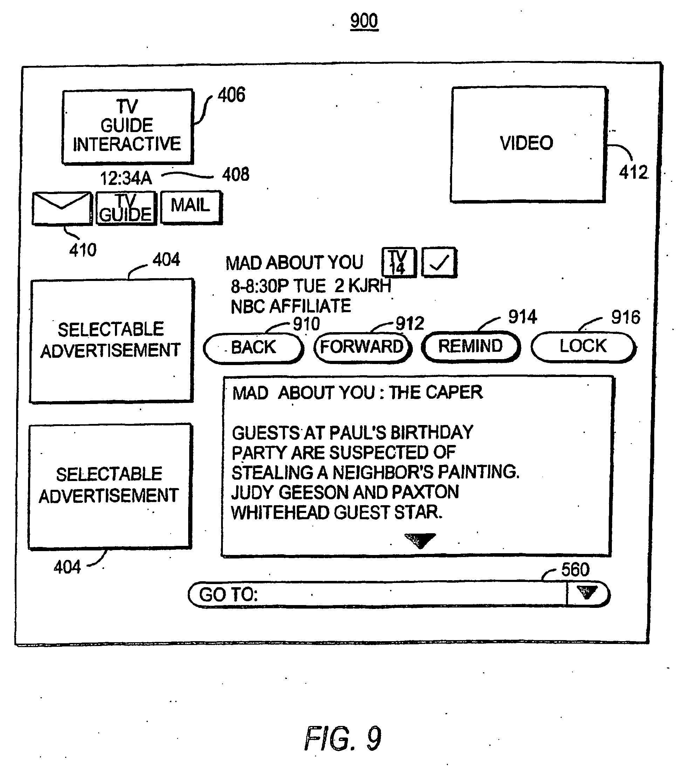

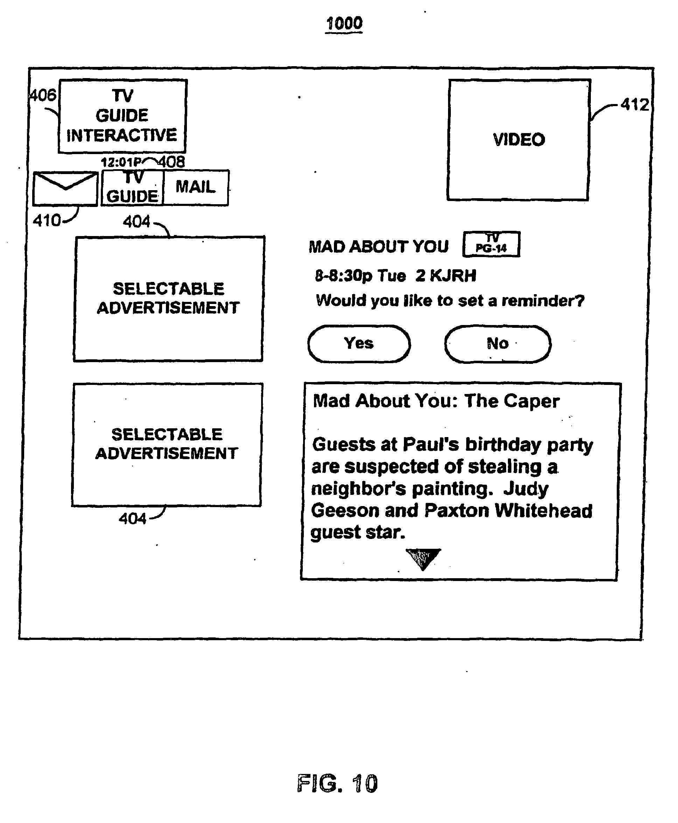

If desired, advanced features may be integrated into program information displays, such as in illustrative program information display 900 of FIG. 9. A user may, for example, set a reminder for the subject program by selecting remind feature 914. A user may also, for example, lock the subject program and, if desired, similar programs, by selecting lock feature 916. A user may return to the last display or other resource by, for example, selecting back feature 910. A user may return to a display or other resource from which a back feature was accessed by selecting forward feature 912. FIG. 10 shows an illustrative set reminder display. The program guide may display set reminder display 1000 in response to a user indicating a desire to set a reminder for a program by, for example, selecting remind feature 914 of display 900 (FIG. 9), or by pressing reminders key 262 of remote control 156 (FIG. 4). Program guide reminder features are described, for example, in Knudson et al. U.S. patent application Serial No. 09/357,941, filed July 16, 1999, which is hereby incorporated by reference herein in its entirety, and the approaches for providing reminder features described therein maybe adapted for use in providing an inter-resource reminder feature. In some embodiments, setting reminders may add events to user calenders. '

In some embodiments, the reminders feature may be inter-resource. That is, the reminder feature may allow users to set reminders for different types of resources. For example, the reminder feature may allow users to set reminders for events provided in services or web sites accessed through the guide throughout the system. The program guide (or other support application) may obtain an identifier for the event and service or site, and store the identifier and time of the event in a reminder table. These two types of resources are only illustrative, as support applications, such as the operating system in this example, may allow users to set reminders for any suitable resource.

In some embodiments, the program guide may provide a user with an opportunity to set channels and other resources as favorites. A user may, for example, press a suitable key on remote control 156 of FIG. 4 (e.g., a "FAV" key) while watching television, while in a BROWSE overlay, after highlighting a program listing, while within an information screen for the channel, or from within any other suitable program guide display screen in which channels or program listings are displayed. Program guides having favorites features are described, for example, in above-mentioned Knudson et al. U.S. patent application Serial No. 09/357,941, filed July 16, 1999, and the approaches for providing favorites described therein may be adapted for use in providing an inter-resource favorites feature.

In some embodiments, the favorites feature may be inter-resource. That is, the program guide (or other support application) may allow the user to identify different types of resources as favorites.
For example, the user may press the FAV key on remote control 156 while accessing an interactive service or a web site via the program guide anywhere throughout the system. The program guide (or other support application) may obtain an identifier for the service or site, and mark it as a favorite. In some embodiments, for example, the guide (or other support application) may query the service or the site for its identifier, and store the identifier in a favorites list.

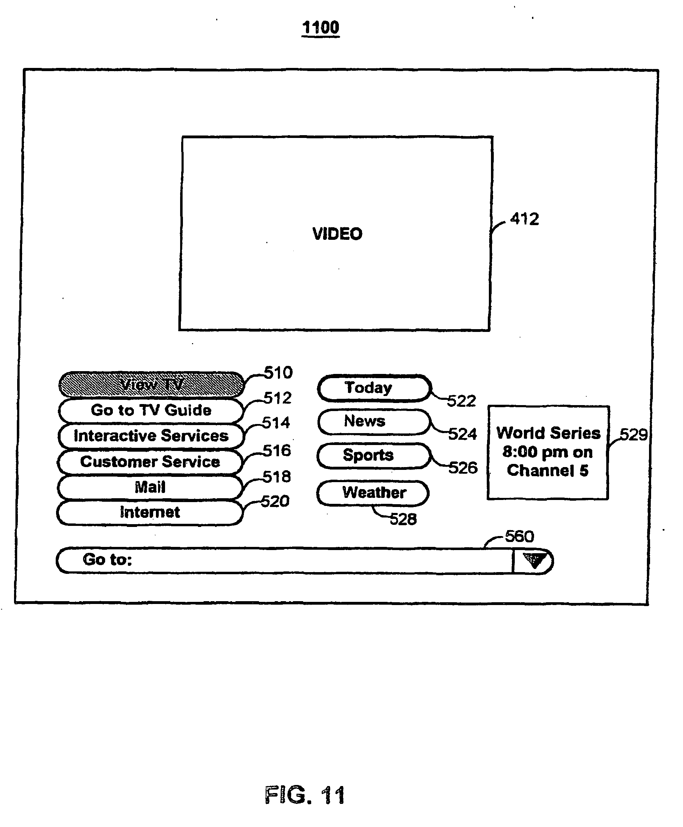

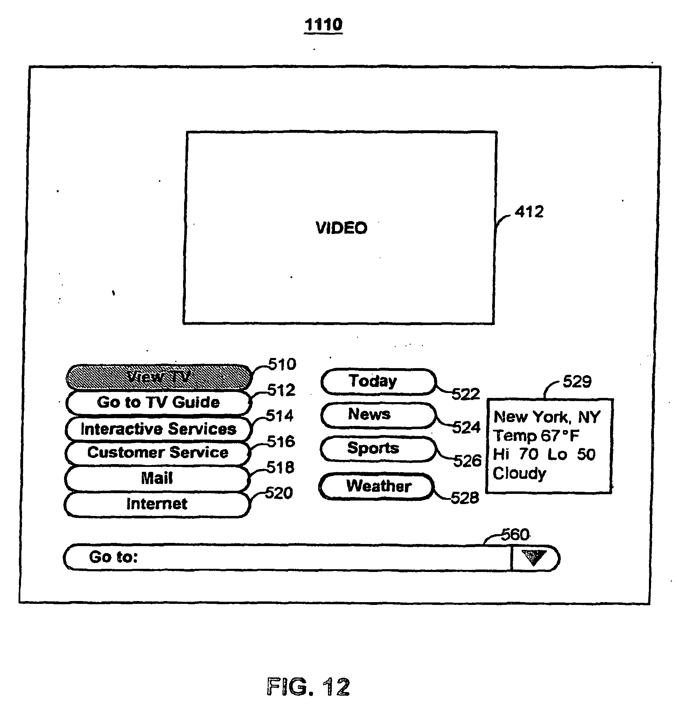

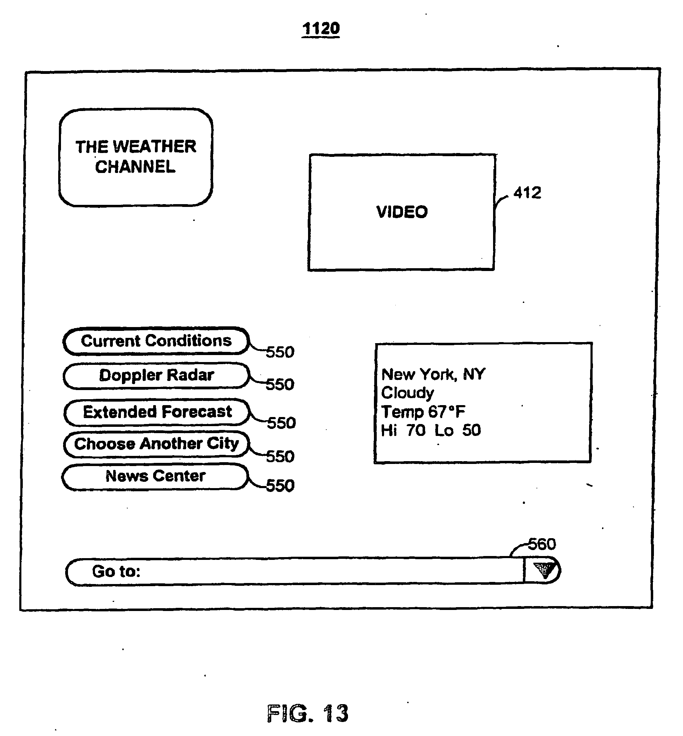

FIGS. 11, 12, and 13 show illustrative displays 1100, 1110, and 1120, respectively, for some embodiments of the invention in the support application is an operating system. The operating system may allow users to access one or more applications or features. In these examples, the operating system may allow users to watch television by selecting feature 510, access one or more supported applications, such as a TV guide, by selecting feature 512, access interactive services by selecting feature 514, communicate with a system provider by selecting option 516, access an e-mail application by selecting feature 518, access the Internet via a built-in web browser by selecting feature 520, or any other suitable feature. In illustrative display 1100, the operating system has defaulted to, or the user has selected, View TV option 510. Accordingly, display 1100 may include a window that displays the currently tuned channel 412 and may include additional features such as features 522, 524, 526 and 528. In some embodiments, the operating system (or other support application) may provide full-screen television. Display 1100 may also include content area 529 for providing content according to the currently selected feature 522, 524, 526 or 528. In this example, the user has selected "today" feature 522 using a highlight region and the operating system has displayed a promotion in content area 529 for a program that airs during the current day. In FIG. 12, for example, the user has selected "weather" feature 528 and the operating system has displayed the current weather conditions. In some embodiments of the present invention, one or more features may include sub-features. FIG. 13 shows an illustrative exploded view for a weather feature 528 having sub-features 550.

As shown in FIGS. 11, 12 and 13, the operating system may provide a "go to" feature 560 that allows users to specify web sites, features, applications or other resources that the user wishes to access. If desired, go to feature 560 may be provided by other support applications, such as a program guide, or may be accessed from supported applications. The user may indicate a desired resource by, for example, selecting go to feature 560 and entering a resource name, selecting a resource from a drop-down selectable list of resource names (as shown), or using any other suitable approach. In some embodiments, the operating system (or other support application) may dynamically fill go to feature 560 with the name of the currently accessed display, feature, website or other resource. Go to feature 560 may then allow users to access a history of their recently accessed resources. In some embodiments, go to feature 560 may be a drop-down list of selectable resources.

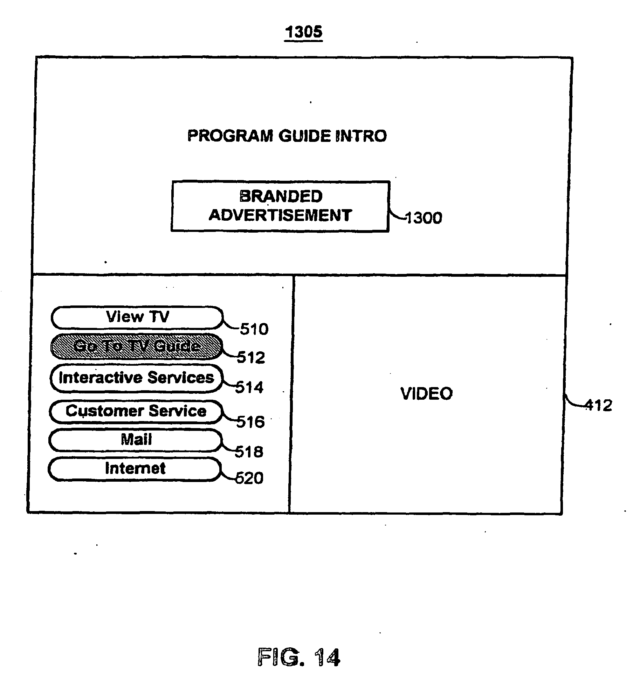

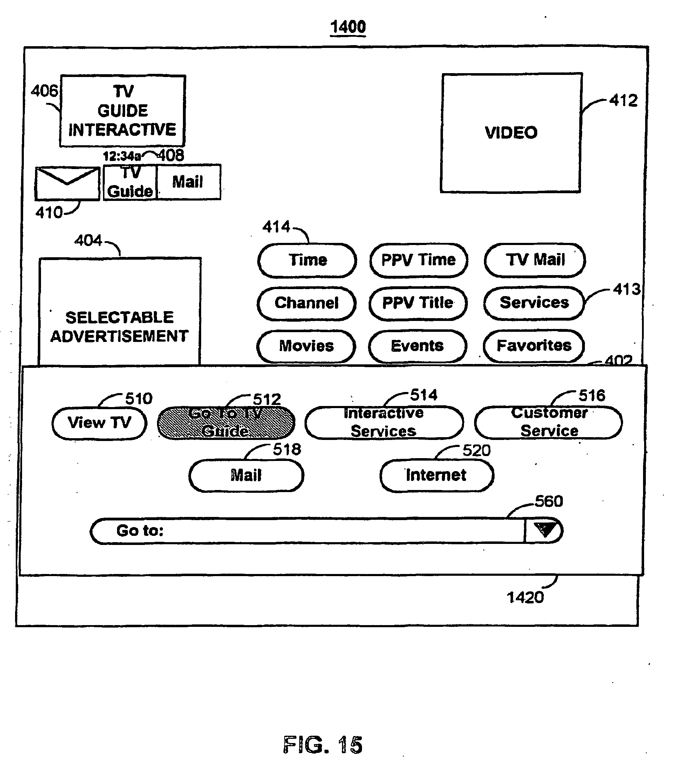

The operating system may support any suitable supported application. In some embodiments, the operating system may provide selectable features for the supported application. In this example, the operating system supports an interactive program guide, and provides feature 512 accordingly. The operating system may launch the interactive program guide in response to, for example, a user selecting feature 512. FIGS. 14 and 15 show illustrative displays that may be provided in accordance with some embodiments of the present invention. FIG. 14 shows an illustrative program guide introductory display 1305. Introductory display 1305 may include, for example, a branded advertisement 1300 for the interactive program guide. Introductory display 1305 may also include options 510, 512, 514, 516, 518 and 520, and video window 412. In response to a user selecting feature 512, the operating system may display introductory display 1305 for a predefined period of time, then provide a program guide menu display, such as illustrative program guide menu display 1400 of FIG. 15. In other suitable embodiments, the operating system may not provide an introductory display. Similar to menu 400 of FIG. 7, menu display 1400 may include a number of selectable options, selectable advertisements, and a picture in guide window 412. The user may indicate a desire to select program guide features from the menu by, for example, moving a highlight region to highlight the desired feature and pressing an "OK" key on remote control 156 (FIG. 4).

As shown in FIG. 15, one or more selectable features of the operating system (or other support application) may be provided in features area 1420. Features area 1420 may be an overlay generated by the operating system (or other support application), or may be integrated with supported application displays, such as a program guide display. In some embodiments, features area 1420 may be displayed for a predefined period of time when the user first accesses the display, and then may disappear. Afterwards, the user may indicate a desire to access features area 1420 by, for example, pressing a "guide key" on the user's remote control. Features area 1420 may include, for example, features 510, 512, 514, 516, 518, 520 and 560. If desired, features area 1420 may include other features, such as a back feature, forward feature, history feature, favorites feature, reminder feature, or other suitable feature.

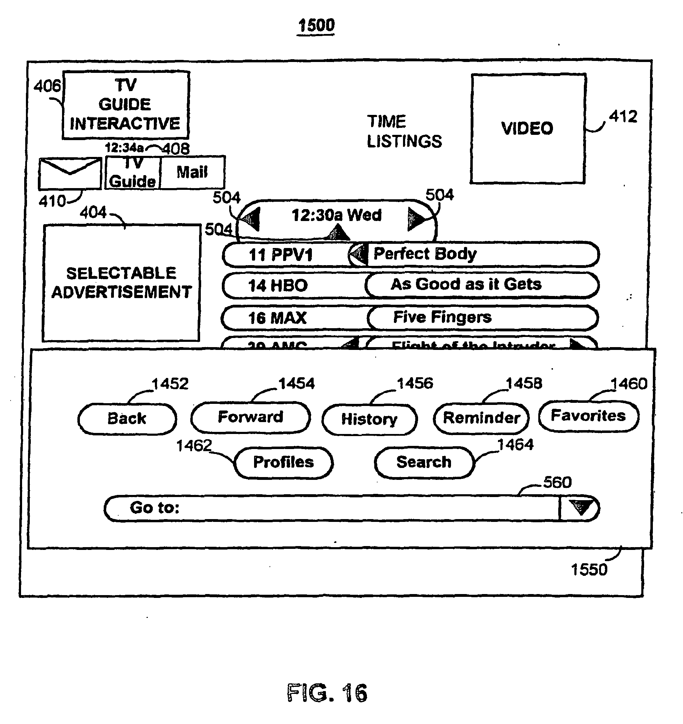

In some embodiments of the present invention, program guide displays accessed from menu display 1400 may include feature areas. If desired, feature areas may be illustrative feature area 1420 of FIG. 15, or another available feature area. FIG. 16, for example, shows an illustrative program guide display 1500 in which television program listings are listed for a particular genre, in this example movies. Display 1500 may be generated, for example, in response to a user indicating a desire to view program listings by pressing a suitable button on a remote control, or by selecting "Movies" from the main menu display of FIG. 15. Display 1500 of FIG. 16 may list program listings in a scrollable list, and may display the channel number, call letters, and logo for the program listings. The program guide may provide the user with an opportunity to scroll through the list of program listings by, for example, pressing "up" and "down" arrows on a remote control. The program guide may highlight on-screen arrows to indicate to a user that an arrow key has been pressed. Display 1500 may also have a number of graphics 406 and 410 and selectable advertisements 404, and may also have video window 412 for displaying the currently tuned channel.

In the example of FIG. 16, features area 1550 may include one or more selectable features of the operating system (or other support application). Features area 1550 may be an overlay generated by the operating system (or other support application), or may be integrated with the program guide menu. In some embodiments, features area 1550 may be displayed for a predefined period of time when the user first accesses display 1500, and then may disappear. Afterwards, the user may indicate a desire to access feature area 1550 by, for example, pressing a guide key on the user's remote control. Features area 1550 may include, for example, back feature 1452, forward feature 1454, history feature 1456, reminder feature 1458, favorites feature 1460, profiles feature 1462, search feature 1464 or other suitable features.

In some embodiments, advanced features may be integrated into displays of a supported application, such as a program guide. For example, the program guide may provide a program information display, such as the illustrative display 900 of FIG. 9, in response to a user highlighting a program listing and pressing an "info" or "OK" key on their remote control. In this example, back, forward, remind and lock features are integrated into the display 900. In response to a user selecting or otherwise indicating a desire to access one of the features, the program guide may call the operating system to perform the feature. If desired, features that have not been integrated into such displays may be provided in a features area that may be overlaid onto the displays.

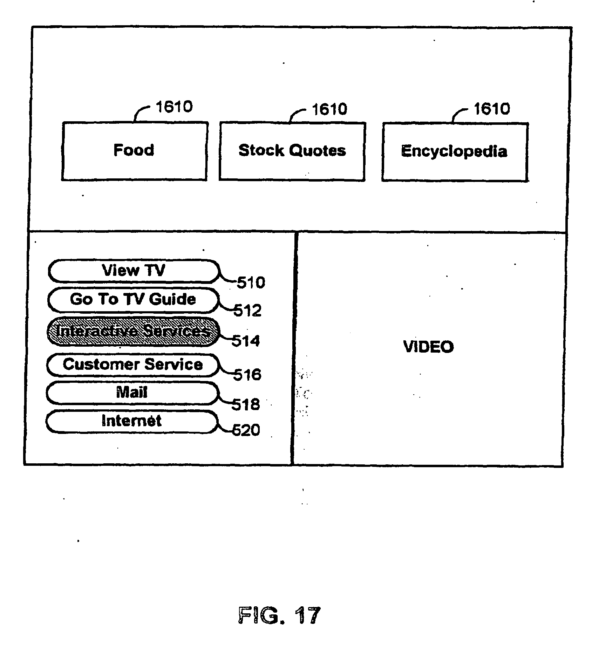

The support application, in this example an operating system, may provide users with opportunities to access interactive services. For example, in response to a user selecting interactive services feature 514 from the displays shown in FIGS. 11 and 12, the support application may provide an interactive services display. An illustrative interactive services display is shown in FIG. 17. Interactive services displays may include, for example, display elements 1610 that users can select to indicate a desire to access interactive services. For example, the user may select a particular display element 1610 to access a food delivery service, access another display element 1610 to access a stock quote service, access another display element 1610 to access any encyclopedia service or access another to access a Dictionary. This list is merely illustrative, and any suitable information service may be supported. Information for these services may be provided, for example, from any suitable facility that can provide data over communications links 108 or 114 (FIG. 1). If desired, two-way interactivity with the services may be provided using communications device 160 (FIG. 2) or 201 (FIG. 3).

In some embodiments, the support application may, in response to the user selection of a display element 1610, launch a web browser and access a web site associated with the service. Users may only be provided with limited access to services provided over the Internet. In such embodiments, the support application may be configured to allow users access to only a limited number of web sites which are also configured to provide access to a limited number of websites, allowing users to access only a finite set of websites.

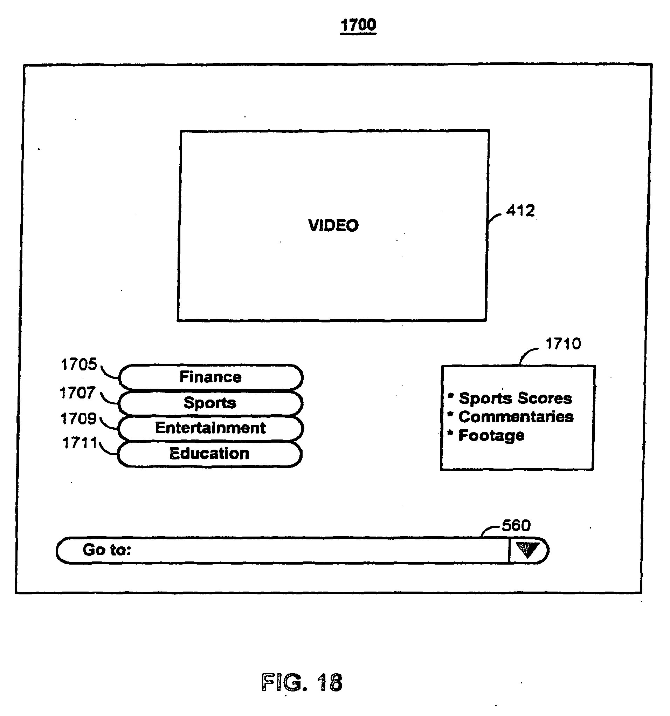

In some embodiments, the support application, whether an operating system, program guide, or other support application, may provide guidance to users to allow them to find desired interactive services more easily. This approach may be desirable when, for example, the number of available interactive services is large. In response to a user indicating a desire to access interactive services by, for example, selecting interactive services feature 514 of FIGS. 12, 14 and 15, services feature 413 from the program guide menu display of FIG. 7 and 15, or using any other suitable approach, the operating system, program guide, or other support application may provide a display of selectable service types. An illustrative service types display 1700 is shown in FIG. 18. Users may select a service type to indicate a desire to access an indicated type of service. For example, users may select service type 1705 to access financial information services, type 1707 to access sports information services, type 1709 to access entertainment information services, or type 1711 to access educational information services. This list of service types is merely illustrative and any suitable service type or combination of service types may be provided depending on the services available to the user. If desired, the operating system may provide information display 1710 having information about the types of services available for a given service type in response to the user highlighting a given feature.

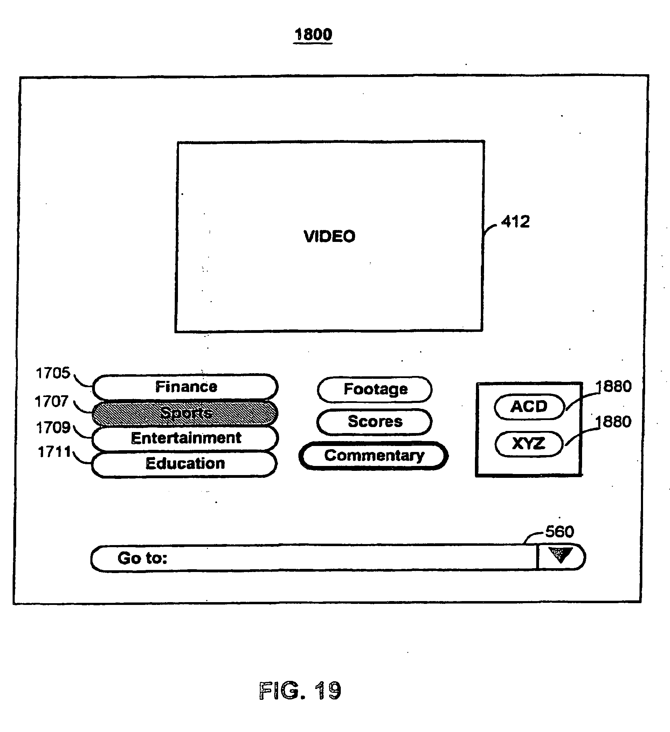

In response to a user selecting (or otherwise identifying) a service type, the operating system may provide a services sub-type display such as illustrative display 1800 of FIG. 19. In this example, there are three subtypes, and the user has selected sub-type "Commentary." In response to the selection, the operating system may provide the user with a selectable list of service indicators 1880 (or otherwise identify a service). In response to a user selecting an indicator 1880, the system may access the service by any suitable approach. For example, the system may launch a web browser and access a web site providing the selected service or access the service via a two-way cable link.

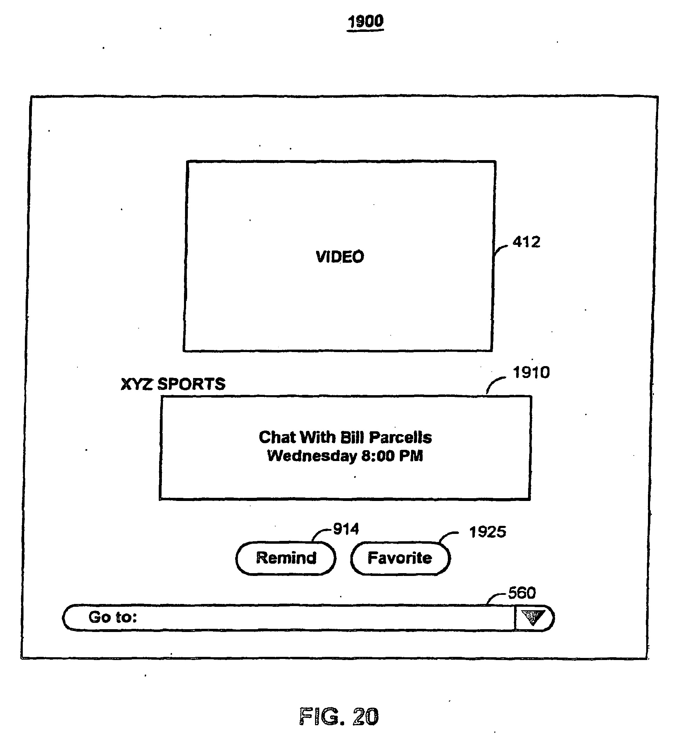

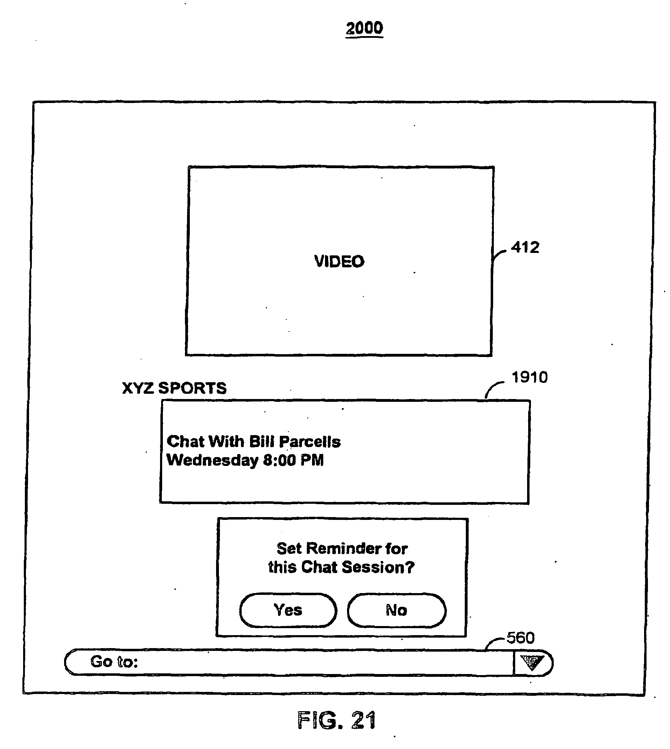

FIG. 20 shows an illustrative service display 1900 for an illustrative service, XYZ Sports. In this example, XYZ Sports offers a chat session with Bill Parcells. Display 1900 provides this information in display area 1910. The service provider may indicate to the operating system (or other support application) that the chat session is available using any suitable approach. For example, data for the service may include one or more flags that indicate data is associated with an event. The operating system may read this flag and provide the user with access to features that operate according to events. In FIG. 20, for example, the operating system has provided a reminder feature 914 to allow the user to set a reminder for the chat session. In response to the user indicating a desire to set a reminder for the chat session by, for example, selecting feature 914, the system may schedule a reminder for the chat session, or may provide a confirmatory display and schedule the reminder if the user confirms the desire to set one. An illustrative confirmatory display is shown in FIG. 21.

The reminder feature may be an inter-resource reminder feature. That is, the reminder feature may allow users to set reminders for different types of resources. For example, the reminder feature may allow users to set reminders for chat sessions as shown in FIG. 20 and to set reminders for programs as shown in FIG. 10. These two types of resources are only illustrative, as support applications, such as the operating system in this example, may allow users to set reminders for any suitable resource.

The operating system (or other support application) may provide a favorites feature. In the example of FIG. 20, users may indicate a desire to set the XYZ sports interactive service as a favorite by selecting favorite feature 1925. In response, the system may register the service as a favorite. In some embodiments, the favorite feature may be an inter-resource favorite feature. For example, the favorite feature may allow users to identify programs, channels, web sites, chat sessions, or any other suitable resource as a favorite. These types of resources are only illustrative, as support applications, such as the operating system in this example, may allow users to identify any suitable resource as a favorite.

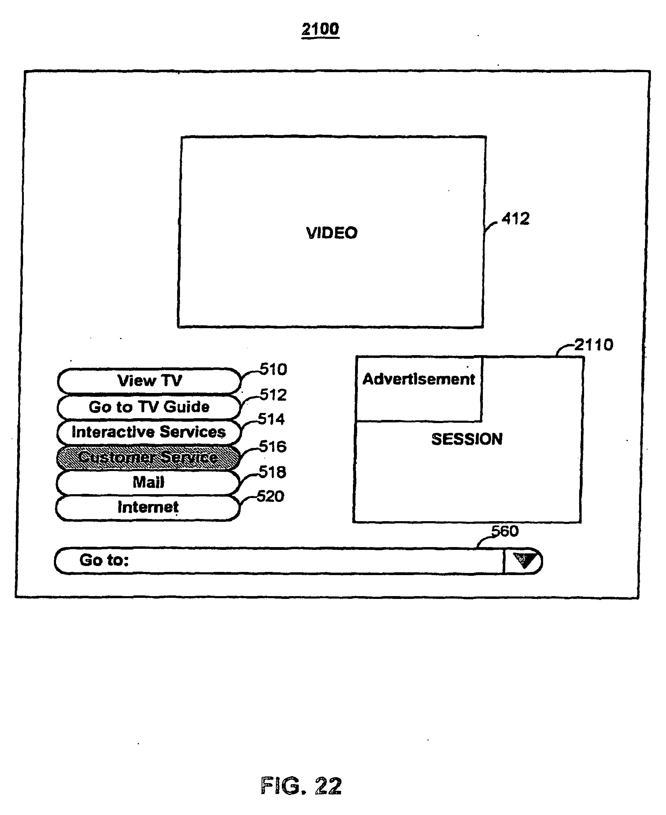

The operating system (or other support application) may allow users to establish a customer service session with a system provider. FIG. 22 shows illustrative display 2100 in which the user has selected customer service feature 516. Display 2100 includes session area 2110. Session area may include one or more advertisements (e.g., text, graphic, video, animation, or other suitable advertisement), and a session portion in which the user may access a session with the system provider. Any suitable session may be provided. In some embodiments, the user may enter a text message that is sent to the system provider. In other embodiments, a real time audio or audio/video session may be established with a live customer service representative using suitable streaming techniques. These two types of sessions are only illustrative, as any other suitable type of session may be provided.

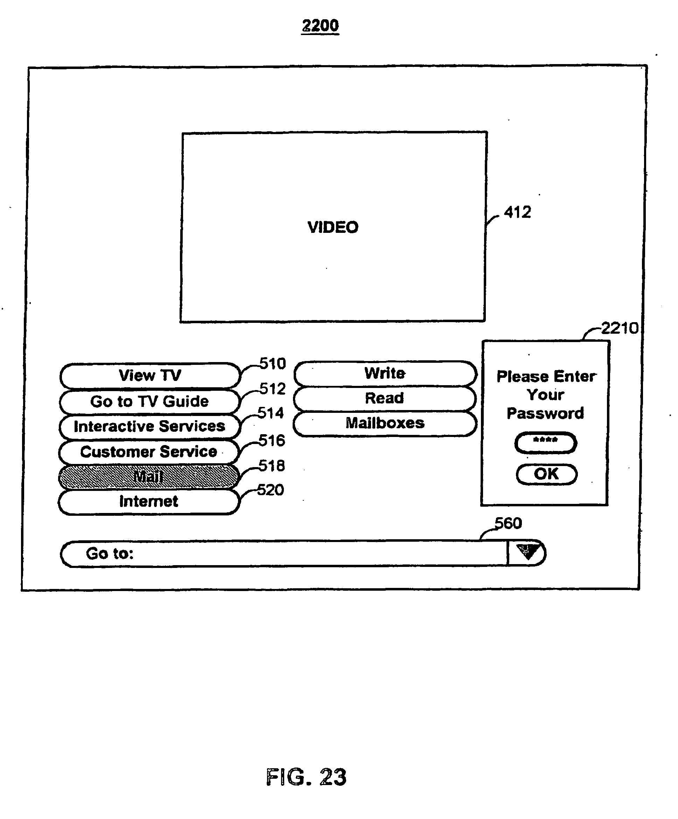

The operating system (or other support application) may allow users to read and write electronic messages, such as e-mail or TV Mail. FIG. 23 shows illustrative display 2200 in which a user has indicated a desire to access their electronic mail by, for example, selecting mail feature 518. The system may prompt the user for the user's password and then allow the user to read and write electronic messages. In some embodiments, the operating system may launch an email editing application and display the application in display area 2210.

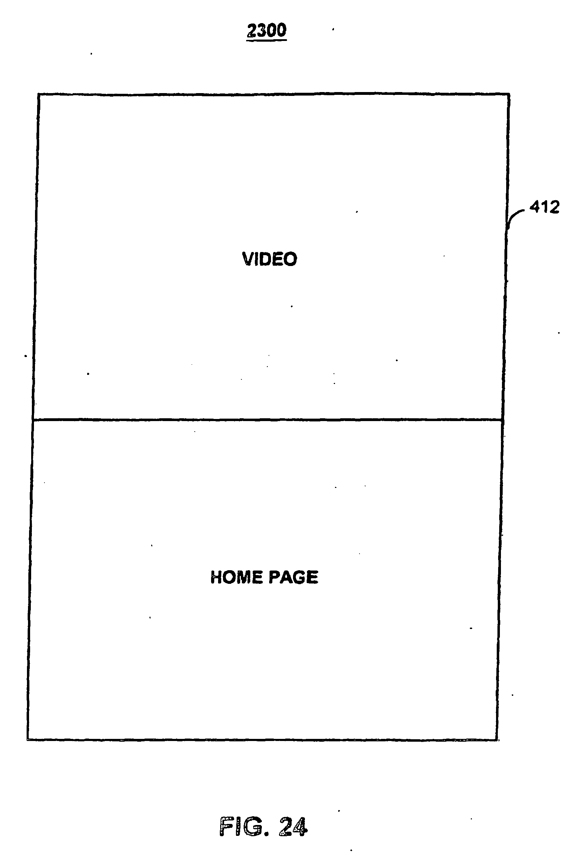

The operating system (or other support application) may allow users to browse the Internet. Browser functionality may be programmed into the operating system, or the operating system may launch a browser in response to a user indicating a desire to access the Internet. FIG. 24 shows an illustrative display 2300 in which a user has indicated a desire to access the Internet by, for example, selecting feature 520. In display 2300, the current television channel is displayed in a first half of the display, and the web browser is displayed in a second. Any other suitable display arrangement may be used if desired.

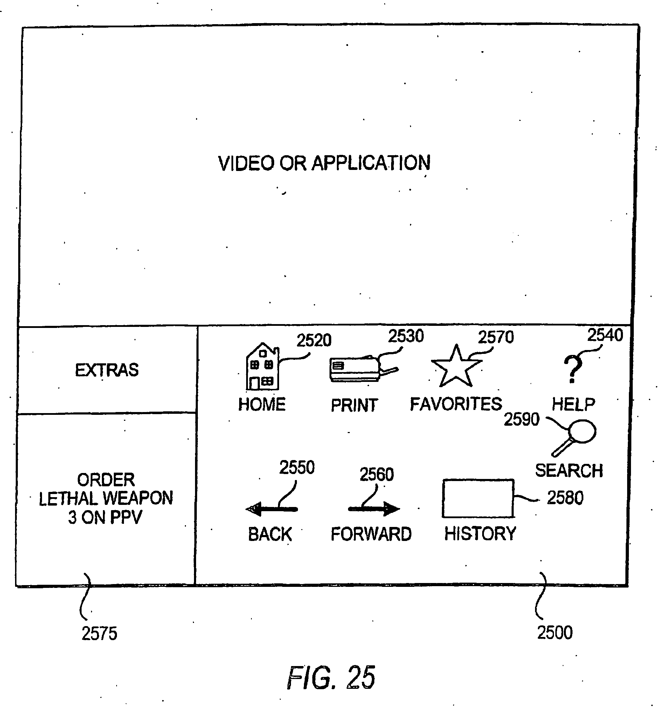

In some embodiments, the support application, whether an interactive program guide, operating system, or other suitable support application, may provide users with an extras feature. Users may indicate a desire to access the extras feature by, for example, pressing EXTRAS key 264 on remote control 156 (FIG. 4) or by selecting a suitable display element. FIG. 25 shows an illustrative extras overlay 2500. The support application may overlay extras overlay 2500 onto the currently viewed program, supported applications, or other displays. Extras overlay 2500 may include one or more features. Some features in overlay 2500 may be the same regardless of what application is displayed when the extras function is performed. Some features may vary depending on the context of an application that is displayed when the extras function is performed. One item may be highlighted by default, and other items may be selectable by a user. A user may navigate among items by, for example, pressing arrow keys 250 on remote control 156 (FIG. 4). A user may select a feature by pressing OK key 252 on remote control 156 (FIG. 4). In response, the support application may dismiss the overlay and perform the specified feature

Extras overlay 2500 may include, for example, advertisement 2575. Advertisement 2575 may be selectable. In response to a user selecting advertisement 2575, the system may display information or access a service or web site associated with the advertisement. Extras overlay 2500 may include, for example, home icon 2520. In response to a user selecting icon 2520, the support application may return a user to a home display. Extras overlay 2500 may include, for example, print icon 2530. In response to a user selecting icon 2530, the support application may print the current screen to a printer attached to set-top box 150 (FIG. 2). Extras overlay 2500 may include help icon 2540. In response to a user selecting icon 2540, the support application may provide a user with information on how to use a current application. Extras overlay 2500 may include, for example, back icon 2550, forward icon 2560, and history icon 2580 that may allow a user to access recent applications. Extras overlay 2500 may include favorites icon 2570 that may allow a user to access a previously set list of favorite resources. The user may select a favorites resource from the list and, in response, the support application may provide the selected resource.

The aforementioned icons and features of extras overlay 2500 are merely illustrative. In some embodiments, extras overlay 2500 may include, for example, icons for specific applications. Icons may be included for applications to allow users to easily access the applications. If desired, icons may be included for applications on a conditional basis. For example, if a user has received electronic mail, there may be a mail icon present on extras overlay 2500.
When reminders are outstanding, extras overlay 2500 may include a reminder feature. Extras overlay 2500 may include features to parentally control a current application. Extras overlay 2500 may include, for example, features relating to a currently active application. Icons for these features may be displayed separately, or the features may be displayed as a result of, for example, a user selecting an option to view "More" features from extras overlay 2500.

Extras overlay 2500 may include, for example, search feature 2590. The search feature may allow users to search for desired programs, sites, applications or other resources. In some embodiments, extras overlay 2500 may include a screen region that allows a user to enter a keyword for a desired resource, such as a web site, channel, or any other suitable resource, and provide the user with a list of matching resources. In some embodiments, extras overlay 2500 may include go to feature 560. In still other embodiments, extras overlay 2500 may include options to parentally control a resource, set a reminder for the resource, add the resource to a calendar, or provide any other suitable feature.

As discussed, some embodiments may provide a back feature. Users may indicate a desire to access a back feature using any suitable approach. For example, users may press BACK key 256 on remote control 156 (FIG. 4). Users may, for example, select an on-screen back icon or other display element such as, for example, in display 900 of FIG. 9, features area 1550 of FIG. 16, or overlay 2500 of FIG. 25. However a user indicates a desire to access the back feature, the system may respond by returning the user to the last display, channel, feature, website or other resource. For example, the user may navigate from time listings screen 500 (FIG. 8) to the previous screen, menu screen 400 (FIG. 7), by indicating a desire to access the back function.

In some embodiments, the support application may track the resources accessed by the user. Set-top box 150 (FIG. 2) may store a list of previously accessed resources. In response to a user indicating a desire to access the back feature, the support application may examine the list of previous resources and then access the last-accessed resource. In such an approach, the back feature may access the previously accessed resource regardless of the current resource type or the previously accessed resource type. In other approaches, the back feature may be resource sensitive. For example, the support application may have multiple lists for different types of resources. As users access a resource within or from a supported application, the supported application may post to the support application information regarding the resource. The information may include, for example, metadata that describes the resource. The support application may examine the metadata and determine which of the multiple lists to update. In response to the user indicating a desire to access the back feature, the support application may determine the current resource accessed, examine the appropriate list, and provide the last similar resource accordingly.

In another suitable approach, the support application may include rules for defining which resources a user can return to from other resources. For example, the support application may only allow users to return to web sites from other web sites or applications. In still another suitable approach, the user television equipment, the support application, or both, may provide multiple interface elements that allow a user to specify the type of resource to which the user desires to return. Any other suitable approach may be used.

If desired, the support application may place a limit on the number of times a user can perform the back function. This limit may be based on, for example, the memory capacity of the set-top box, a time limitation, or any other suitable factor. The backup sequence, which is the order in which the back function visits previously accessed resources, may not be identical to the reverse of the sequence used to get to a specific resource. For example, intermediate resources may be bypassed. Passwords or codes may be required to return to specific resources. Resources that were previously both entered and exited may be bypassed. Resources visited multiple times may not be revisited the same number of times when backing up through resources. While a user is watching television, for example, the back function may return the user to a previous resource, or it may function like a previous channel key, such as PREV key 254 on remote control 156 (FIG. 4).

Users may indicate a desire to access a forward feature using any suitable approach. For example, users may press a FORWARD key 258 on remote control 156 (FIG. 4). Users may select an on-screen forward icon or other suitable display element, such as, for example, in display 900 of FIG. 9, features area 1550 of FIG. 16, or overlay 2500 of FIG. 25. However a user indicates a desire to access the forward feature, the system may respond by returning the user to the last display, channel, feature, website or other resource, from which the user used the back feature. For example, after using the back feature from screen 500 (FIG. 8) to go to menu screen 400 (FIG. 7), the user may return to time listings screen 500 (FIG. 8) by using the forward feature.

The support application may generate a forward sequence. The forward sequence is the order in which the forward function visits resources from which the back function was performed. The forward sequence may not be identical to the reverse of the sequence used to get to a specific resource. For example, intermediate resources may be bypassed. Passwords or codes may be required to return to specific resources. Resources that were previously both entered and exited may be bypassed. Resources visited multiple times may not be revisited the same number of times when advancing through applications.

A forward feature may be implemented using any suitable approach. For example, the support application may track the resources accessed by the user. Set-top box 150 (FIG. 2) may store a list of previous resources. In response to a user indicating a desire to access the forward feature, the support application may examine the list of previous resources and provide the last resource from which the user accessed the back function. In such an approach, the forward feature may access the previously accessed resource regardless of the current resource type or the previously accessed resource type. In other approaches, the forward feature may be resource sensitive. For example, the support application may have multiple lists for different types of resources. As users access a resource within or from a supported application, the supported application may post to the support application information regarding the resources. The information may include, for example, metadata that describes the resource. The support application may examine the metadata and determine which of the multiple lists to update. In response to the user indicating a desire to access the forward feature, the support application may determine the current resource accessed, examine the appropriate list, and provide the last similar resource accordingly.

In another suitable approach, the support application may include rules for defining which resources a user can use the forward function to go to from other resources. For example, the support application may only allow users to use the forward function to go to web sites from other web sites or applications. In another suitable approach, the user television equipment may provide multiple interface elements that allow a user to specify the type of resource the user desires to use the forward function to go to. Any other suitable approach may be used.

Users may indicate a desire to access a history feature using any suitable approach. For example, users may select history feature 403 from menu screen 400 of FIG. 7, or by pressing a suitable key (e.g., HISTORY key 260) on remote control 156 of FIG. 4. Users may select an on-screen icon or other display element such as, for example, history feature 1456 from features area 1550 (FIG. 16), history icon 2580 from FIG. 25, or using any other suitable element. In response, the support application may provide a history display.

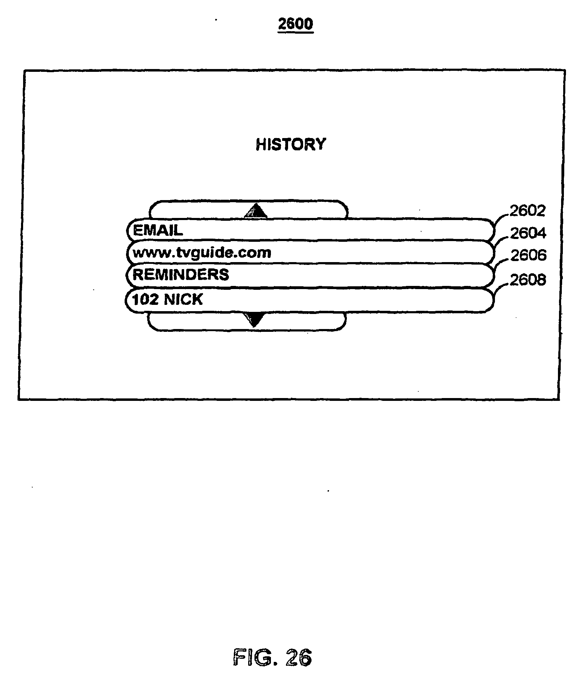

An illustrative history display 2600 is shown in FIG. 26. History display 2600 may include a list of recently accessed resources. In this example, the user previously accessed an e-mail application 2602, web site 2604, feature 2606, and channel 2608. The support application may provide the user with an opportunity to select a resource in the resource history list. In response to the user selecting a resource, the support application may return the user to the selected resource.

As discussed, some embodiments of the present invention may provide a reminder feature. The reminder feature may provide users with an opportunity to set reminders for user-selected resources or events.
Events may include any suitable future content of a resource such as, for example, future television shows, future chat sessions, birthdays, or any other suitable event. A user may specify events that are not scheduled for a particular time as reminders, such as alerts when stocks reach a specified price.

A user.may indicate a desire to schedule a reminder for a resource or event using any suitable approach. For example,.the user may press a suitable key on a remote control (e.g., REMINDERS key 262 on remote control 156 of FIG. 4). Users may select an on-screen icon or other suitable display element, such as feature 914 of FIGS. 9 and 20, feature 1458 of features area 1550 (FIG. 16), or any other suitable display element. In one suitable approach, users may set reminders for resources from a resource information display. Resource information displays are displays that may provide additional information for resources. These include, for example, program information displays, such as display 900 of FIG. 9.

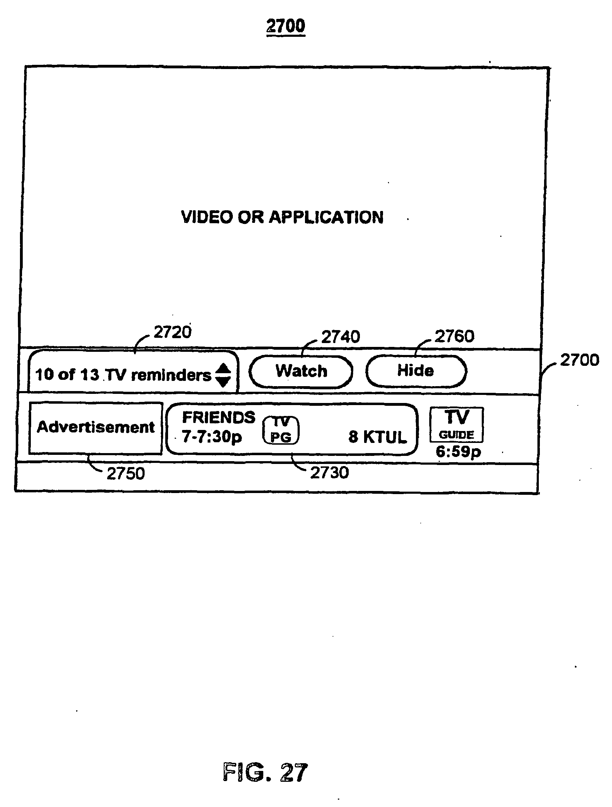

Whatever the approach used by the support application to provide users with opportunities to set reminders, the support application may maintain a list of upcoming reminders. The reminder list may include, for example, identifiers for events that a user has scheduled reminders for, the resources on which the events are provided, the start times of these events, or any other suitable information. The support application may monitor the list and, at a suitable time (e.g., a predefined time before an event, or when an event starts), the support application may provide a reminder display in which reminders for one or more events are provided. The reminder display may be overlaid onto an active application. If desired, the support application may display a reminder overlay in response to a user pressing a suitable key, such as REMINDERS key 262 on remote control 156 (FIG. 4). FIG. 27 shows illustrative interactive reminder overlay 2700 that may be provided when an event occurs for which a reminder has been set. Reminder overlay 2700 may have active reminder region 2720. When multiple reminders are active concurrently, the support application may allow the user to cycle through the reminders in active reminder region 2720 using arrow keys 252 on remote control 156 (FIG. 4). The support application may allow the user to select a reminder and modify or delete the reminder. In the example of FIG. 27, the user may select watch feature 2740 to select a reminder for a television program, delete the reminder, and tune to the television program.

A reminder may include information associated with an event in reminder information region 2730. Reminder information region 2730 may include a channel name and a title of a selected program, a name and web address of a chat session, a name of a birthday, a symbol and price for a stock, any other suitable reminder information, or a combination of such reminder information.

A reminder may identify a type of event. In this example, reminder information region 2730 for a program listing reminder is formatted as a television listing. A reminder for a chat session, for example, may be formatted as a web address. A reminder may include a brand logo of an application in which the reminder was selected.

A reminder may have one or more selectable options relating to the reminder. For example, as shown in FIG. 27, the support application may provide one or more feature in reminder overlay 2700 that allows a user to access an event. The feature may be dynamic depending on the type of event for which the reminder is displayed. In this example, feature 2740 allows the user to watch a program for which a reminder is displayed. For chat sessions, for example, feature 2740 may allow the user to "chat" (i.e. participate in the chat session). A stock reminder may include options to sell or hold. A birthday reminder may include options to visit one or more electronic commerce applications or web sites in order to purchase birthday.gifts, or may allow the user to send a person an email wishing the person a happy birthday.

Reminders may include advertisements such as advertisement 2750 which may be selectable by a user. For example, a user may select advertisement 2750 in order to order a pay-per-view.

The support application may provide a user with an option to hide a reminder at any time without acting upon the reminder. For example, the user may select "Hide" feature 2760 in order to hide reminder overlay 2700. The user's remote control may include a key to allow the user to access the reminder feature. For example, a user may press REMINDERS key on remote control 156 (FIG. 4) in order to view reminders overlay 2700.

Some embodiments of the present invention may provide a favorites feature. The favorites feature may allow users to set any resource as a favorite, such as a display, web site, channel, or other suitable resource. The support application may allow a user to access a list of favorite resources. The list of favorite resources may be specific to a currently active application, or it may be a comprehensive list of favorites from multiple applications. If desired, the support application may allow users to maintain multiple favorites lists, or support favorites lists for multiple users.

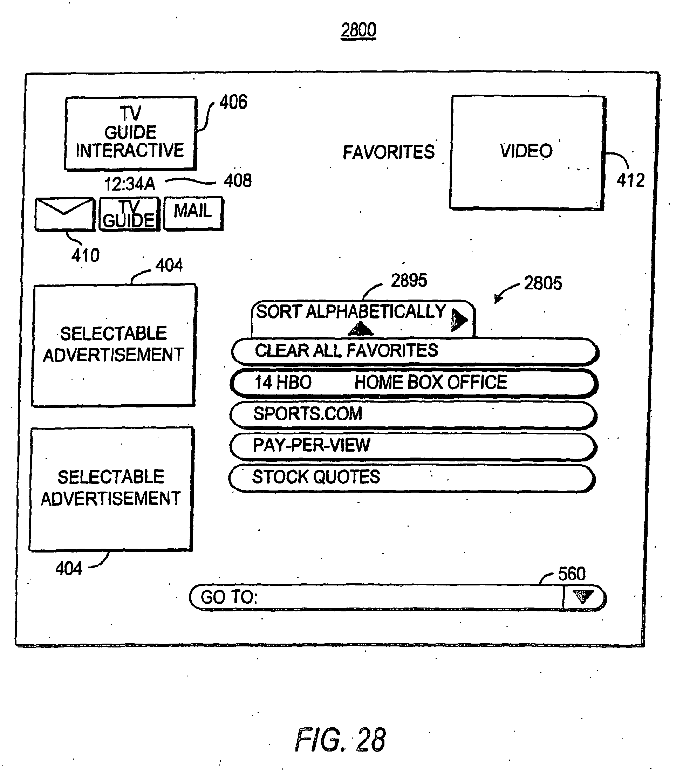

In response to a user indicating a desire to access a list of favorites, the support application may provide a favorites display. An illustrative favorites display is shown in FIG. 28. The user may indicate a desire to access a list of favorites by, for example, selecting favorites feature 1460 of features area 1550 (FIG. 16), favorites feature 1925 of display 1900 (FIG. 20), favorites feature 2570 of overlay 2500 (FIG. 25), or using any other suitable approach. In some embodiments, users may access the favorites feature by pressing FAV key 266 of remote control 156 (FIG. 4).
In other embodiments, users may press FAV key 266 to designate a resource as a favorite.

If desired, the support application may allow the user to designate sort criteria for list 2805. In this example, the user has selected that the list be sorted alphabetically. The system may allow the user to specify the type or types of resources included in list 2805. In practice, the system may allow the user to specify any other suitable characteristic of list 2805.

In some embodiments, the support application may provide support for multiple users across multiple applications. The support application may allow each user to define multiple user profiles. A profile may have, for example, associated passwords or codes that allow a user to gain access to resources. In some embodiments, profiles may have associated parental control functions to define which resources are accessible by an associated user or users. In some embodiments, profiles may include purchasing support. A profile may include details of one or more credit cards, shipping addresses, billing addresses, or other suitable resources, in order to facilitate purchasing from any application service, web site or other resource.

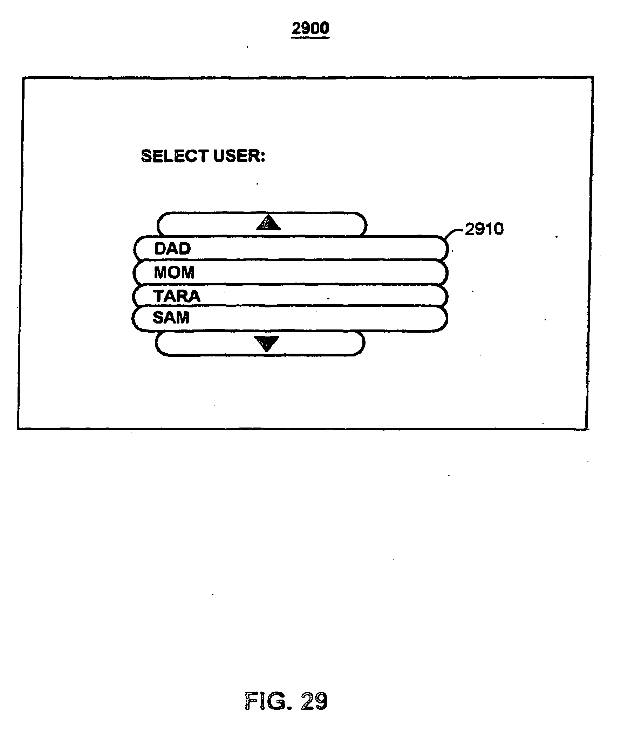

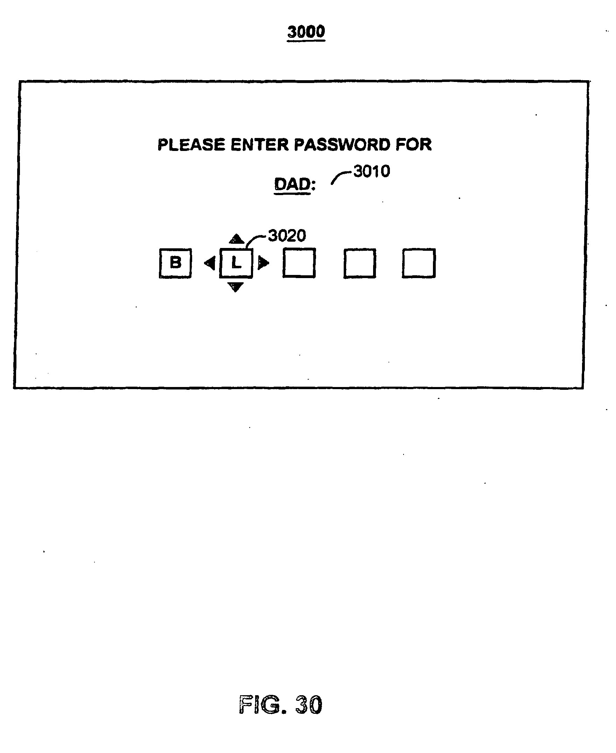

FIG. 29 shows an illustrative user display 2900 which may provide a list of all users. The support application may provide display 2900 in response to, for example, a user selecting profiles feature 417 of FIGS. 7 and 15, feature 1462 of features area 1550 (FIG. 16), or in response to any other suitable user indication. A user may access a user profile by selecting a user name such as the name "DAD" 2910, using arrow keys 250 and OK key 252 on remote control 156 (FIG. 4). In response, the support application may prompt the user to enter a password. FIG. 30 shows illustrative password display 3000.
Password display may include user name 3010 and string entry region 3020. As shown in FIG. 30, the user may enter a password using an alphanumeric interface and keys 250 and 252 of remote control 156.

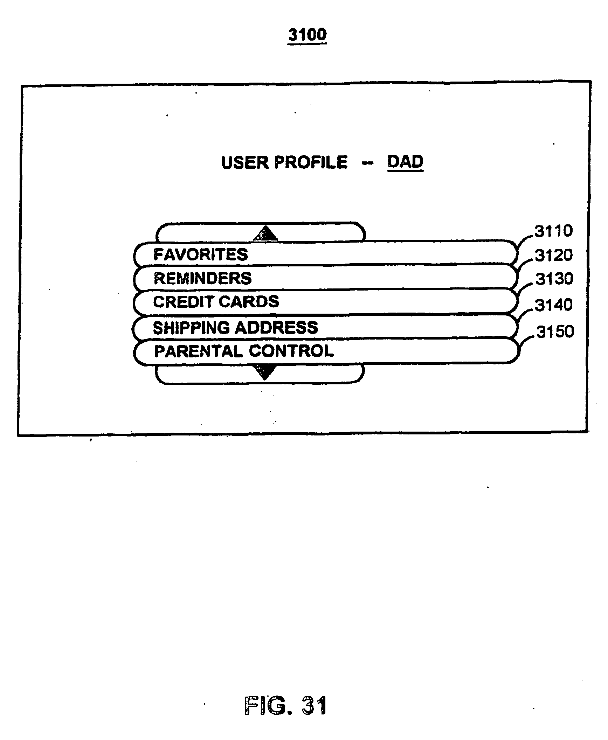

In response to the user entering a correct password, the support application may provide a user profile display. FIG. 31 shows illustrative user profile display 3100, having links to user favorites feature 3110, user reminders feature 3120, user credit cards 3130, user shipping addresses feature 3140, and parental control feature 3150. Favorites feature 3110 and reminders feature 3120 may allow the user to specify favorite resources, and schedule reminders for favorite resources, respectively. Credit cards 3130 and shipping addresses 3140 are both elements of purchasing support, and may allow the user to enter credit card and shipping information. User profile display 3100 may provide other types of purchasing support, such as billing addresses and information on past purchases, in order to facilitate purchasing in any electronic commerce application.

Some support applications may provide inter-resource parental control features. Users may, for example, may be allowed to specify parental control restrictions for one or more resources. In some embodiments the parental control feature in one resource may provide a link to a parental control feature in another resource. For example, a parental control feature for Internet access may provide a link to a parental control function for television channels. The support application may allow users to synchronize parental control restrictions between resources or have them be resource-specific.

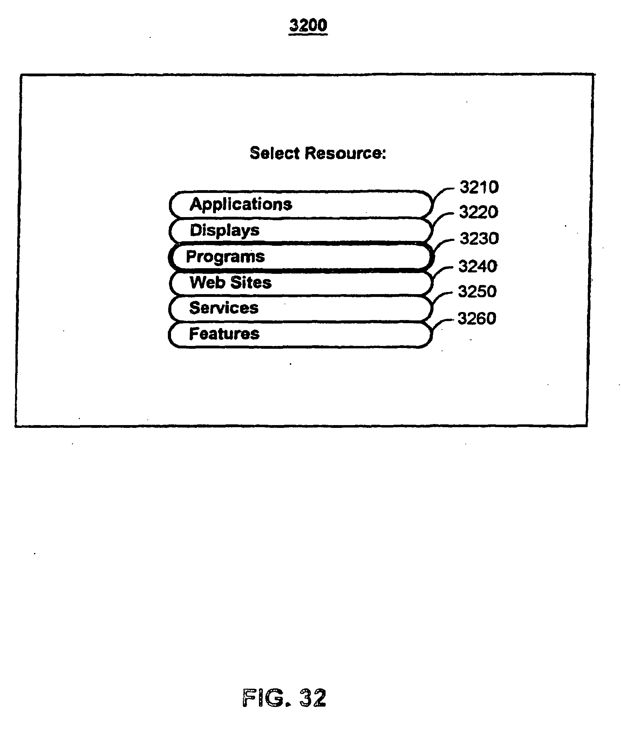

In response to the user selecting parental control feature 3150 from user profile display 3100, the support application may provide the user with opportunities to set parental control features for one or more resources. The support application may, for example, provide resource display 3200 of FIG. 32 and allow the user to select a resource for which the user wishes to set parental control settings. In this example, the support application allows the user to define parental control settings for applications 3210, displays 3220, television programs 3230, web sites 3240, interactive services 3250, and features 3260.

In some embodiments, the support application may allow users to set parental control criteria that are used by multiple resources. For example, the support application may store parental control settings for age ranges, control ratings, or other criteria that a user may set once. Supported applications may call the support application for these general settings, and use them when providing content.

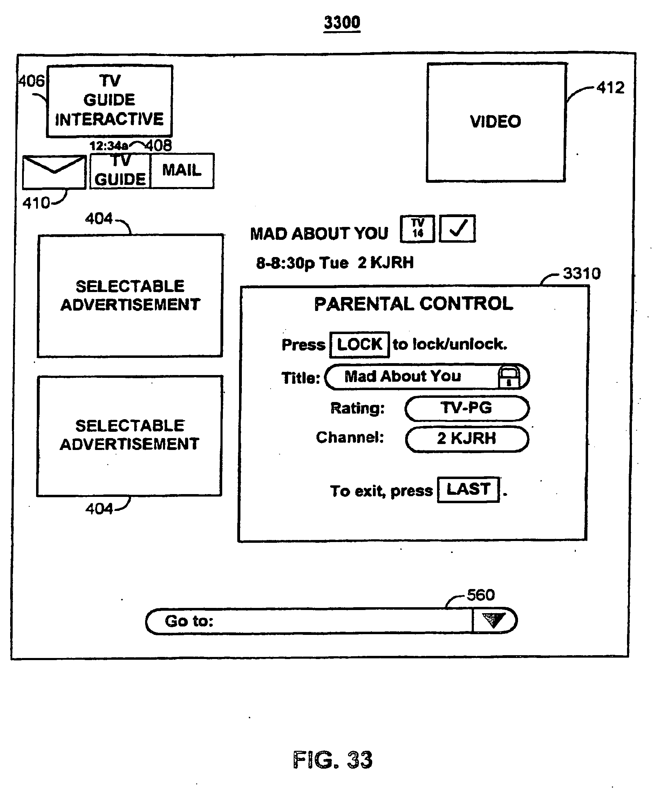

In response to the user selecting a resource, the support application may provide a resource sensitive parental control sequence. In some embodiments the support application may, for example, store a table of supported applications and the types of resources they may set parental control settings for. When the support application must resolve whether a user may access a resource, or when the support application provides a user with an opportunity to set parental controls for a resource, the support application may search the table for the type of resource and corresponding supported application. In the example of FIG. 33, the user has selected programs 3230, and the support application launched a parental control feature from a program guide. The parental control feature allowed a user to access a program listing, enter an information display, and provided lock overlay 3310. Program guide parental control is described in, for example, above-mentioned Knudson et al. In response to the user selecting web site resource 3240, for example, the support application may launch a suitable web site parental control application. In response to a user selecting features 3210, 3220, 3250, or 3260, for example, the support application may provide a list or other suitable graphical display of resources of the selected type that are available on the system. The user may then associate a user profile with one or more of the provided resources, thereby indicating which users are allowed to access the resources. These approaches for providing parental control of different resource types are only illustrative and any other suitable approach may be used.

Some embodiments may allow users to search across multiple resources. A user may indicate a desire to search across multiple resources by, for example, selecting search feature 1464 of FIG. 16. In response, the support application may provide the user with an opportunity to select one or more search targets. A user may be allowed to search any combination of resources.

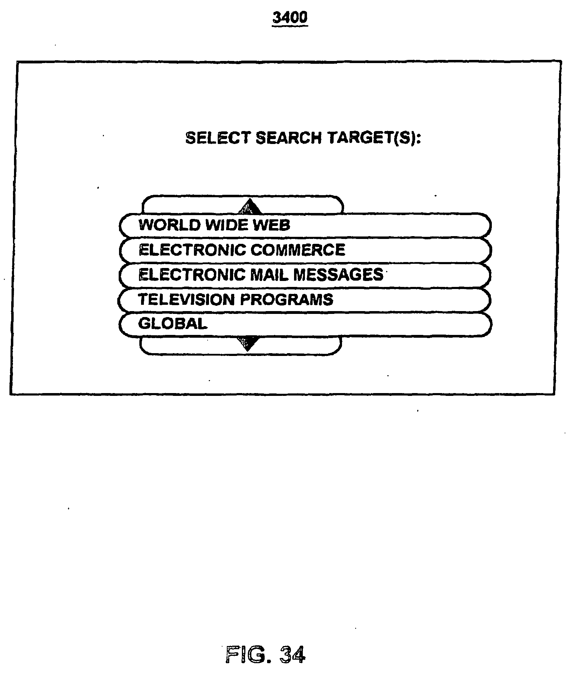

An illustrative search target display 3400 is shown in FIG. 34. Search target screen 3400 may include a list of possible search targets, as the world wide web, electronic commerce, electronic mail messages, television programs, or any other suitable target. The system may also allow a user to perform a global search, which is a search of all resources.

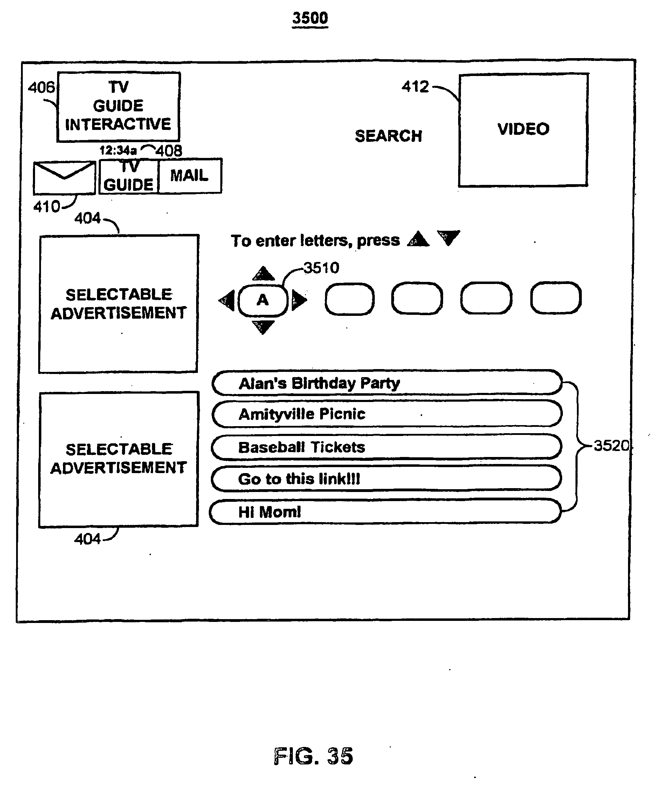

In response to the user selecting one or more targets (e.g., by highlighting a target and pressing on key 252 of remote control 156 (FIG. 4)), the system may provide a search display. An illustrative search display 3500 is shown in FIG. 35. Search display 3500 may allow a user to enter a keyword or keywords. As the user enters a keyword, a list of search results may advance to the correct location in order to display applications that match the keyword. For example, a user may enter "A" into keyword entry region 3510. A search results list 3520 may advance to the applicable portion of a list of all possible search results.

Some embodiments of the present invention may use special display effects to draw users' attentions to particular screen elements. For example, the support application may present information in a screen region without completely dismissing or obscuring a previous active application display. The system may attract the user's attention to the new screen region by dimming the previous screen and by displaying the new overlay, perhaps in a brighter color, on top of a portion of the previous screen. These approaches may be used to display, for example, overlay 2500 (FIG. 25), or features area 1500 (FIG. 16). The support application may use this approach when providing, for example, an extras feature, favorites feature, searching feature, reminders feature, profile feature, or any other suitable feature, in which overlaying a first display or display region occurs.

For example, a user may select a television program or channel for locking from within a program guide (whether a support or supported application).
The support application may dim the current screen, and may display an overlay requesting entry of a parental control code. This may indicate to the user that the user must focus on the area of the screen requiring an input, while also indicating that there is an active application. In response to the user entering a code, the support application may remove the overlay and undim the previous display or provide an additional display relate to the lock request.

As another example, the user may be in a supported application, such as an email application, and a reminder occurs. The support application may dim the email application, and display a reminder overlay onto the top portion of the display. If the user dismisses the reminder, the support application may return the email application display to its previous brightness level. If the user acts on the reminder and a new display is required, the support application may display it in partial or full screen. For example, if the reminder was for a television program, the support application may display the program in full screen or in a small video window as part of the email application.

Some embodiments may provide video windows for allowing users to watch television programs or other videos. In response to a user indicating desire to change channels or other video sources (e.g., by changing channels, acting on a reminder, etc.), the support application may dim the currently active supported application display and change sources. If desired, the support application may provide a flip overlay, which may be undimmed, in a portion of the display.

In some embodiments, the support application may provide a flip overlay when a user changes between other types of resources, such as when a user changes between applications. The flip overlay may be undimmed (or bright), and the application area of the display may be dimmed (or less bright). The support application may dismiss the flip overlay after a predefined time or in response to a user action, and may un-dim the application over which the overlay is displayed.

Supported applications may include an on-screen option to tune to a program or channel. For example, one application may be related to a particular program provider. That application may include a selectable option or advertisement for a specific television program, which may be broadcast at the time the user is in that application. Selecting that option may cause the requested program to be displayed in a partial screen video window, with the flip banner displayed over part of the screen, and with the underlying application dimmed in the background.

In any of the above flip examples, the user may desire to continue navigating television while the flip banner is displayed. The user may, for example, press an arrow key on the remote control to "browse" to information for a different channel, to highlight an advertisement, or to browse to future program listings. The user may enter a channel number or press a "previous channel key". After the user has selected a specific program or advertisement, the OK or SELECT key can be used to tune to that program, view additional information about the program or ad, set a reminder for the program, or perform some other action. If the user tunes from the browse overlay, the flip banner may be displayed for the newly selected channel.

In some embodiments, the support application may animate highlighted display elements. For example, a bright yellow outline may be presented about the highlighted display element, and that outline may "shimmer," i.e., a brighter region of the outline may move around the display element. The highlighted display element may change colors. Display elements may be animated as they are drawn onto the screen. For example, selectable buttons may slide or glide into position when a screen is first drawn. Selectable display elements may have animations to draw attention to them. For example, a selectable information service may alternate between displaying news, weather, and sports headlines. Display elements may slide on or off a screen in an indicated direction when a user presses an arrow key on a remote control.

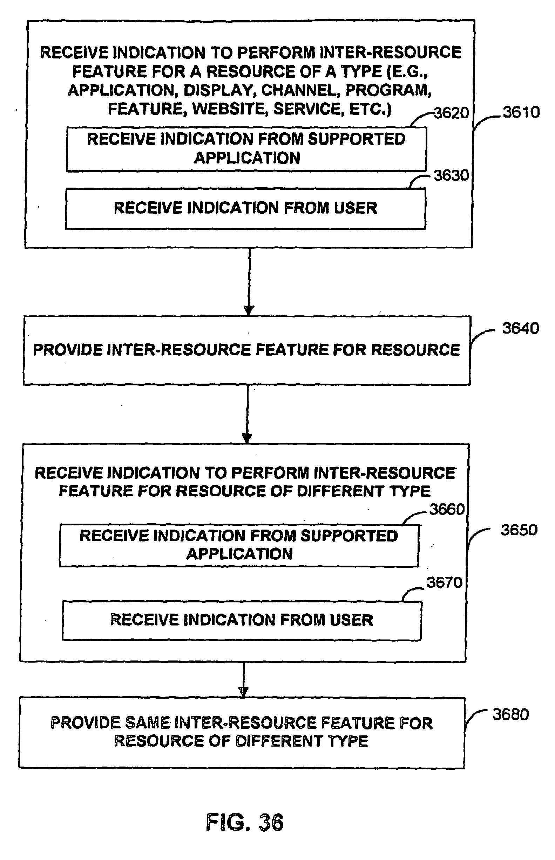

FIGS. 36-44 are flowcharts of illustrative steps involved in providing various features of the present invention. In practice, the steps shown in FIGS. 36-44 may be performed in any suitable order, some may be deleted, and others added. Some of the steps shown in FIGS. 36-44 involve providing users with opportunities to interact with the system, performing various processes, or providing various displays.
These and other steps may be performed by, for example, the support application, supported applications, or a combination thereof. Any suitable software architecture may be provided. For example, the steps may be performed by a client application that is programmed to generate or download screens suitable to provide such opportunities, an Internet browser that downloads suitable pages to provide such opportunities, peer applications, or using any other suitable approach. In non-on-line arrangements, processing for these operations may be performed by a client, a server, or distributed among peer applications, depending on the chosen system implementation and the processing requirements of such operations. In on-line arrangements, such processing may be performed by the user's television equipment 160 or Internet server 180, depending on, for example, the processing and storage capabilities of user television equipment 160 or, the chosen implementation for the interactive applications, the processing requirements of such operations, or other factors. For purpose of clarity, the following discussion will describe the steps shown in FIGS. 36-44 as being performed by "the system," which is intended to include any suitable system, support application and supported applications for performing the steps. In addition, while some of the steps shown are described as being performed by the support application or the supported application, the features describe herein may performed by a system in which a number of applications act as both supported and support applications.

FIG. 36 is a flowchart of illustrative steps involved in providing inter-resource features in accordance with one embodiment of the present invention. At step 3610, the support application receives an indication to perform an inter-resource feature for a resource having a type. The resource may be any suitable resource, such as an application, display, channel, program feature, website, service or other feature. The indication may come from a supported application (step 3620) that may have received the indication from the user. In another suitable approach, the support application may receive the indication from the user (step 3630) (i.e., from a user input device). A combination of these approaches may be used.

The inter-resource feature for the resource is provided at step 3640. The feature may be provided by the support or the supported application. Features may be provided by the support application to the supported application via, for example, API calls, DLLs, or using any other suitable approach. The support application may in turn provide the feature to the user in accordance with its programming. In another suitable approach, the support application may provide the feature to the user independently of the supported application.

At step 3650, the support application receives an indication to perform the inter-resource feature for a resource of a different type. This may include receiving an indication from a supported application (step 3660), or receiving an indication from a user (step 3670), or both. At step 3680, the support application performs the inter-resource feature for the different resource.

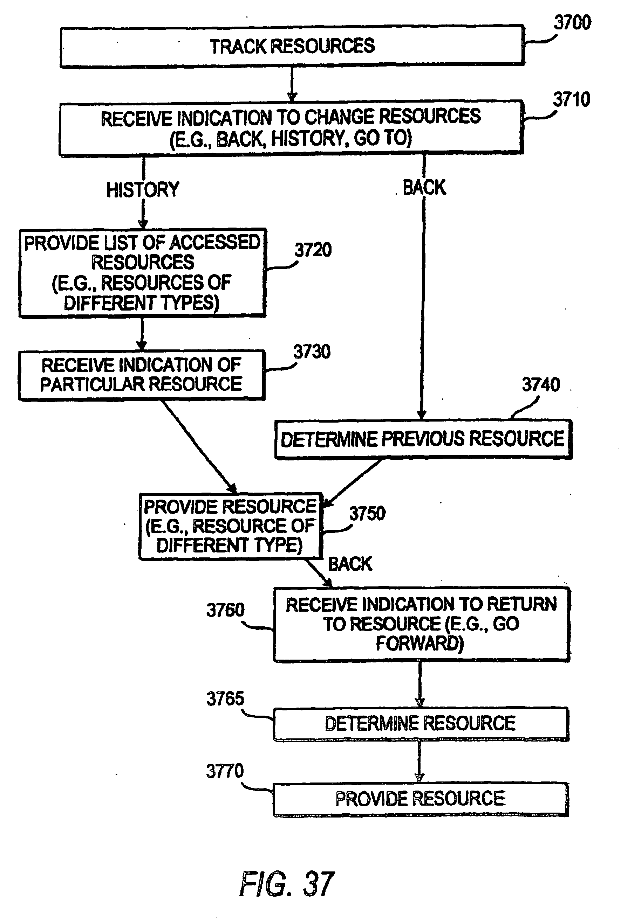

FIG. 37 is a flowchart of illustrative steps involved in providing back, forward and history features in accordance with one embodiment of the present invention. The support application may track the resources accessed by the user at step 3700. The support application may track a predefined number of resources. At step 3710, the support application receives an indication to change resources. The indication may come from a supported application or from the user. When the indication is to access a history, the support application may provide a list of accessed resources (3720), and receive an indication, from the supported application or the user, of a particular resource at step 3730. The support application provides the resource to the supported application (which provides the resource to the user) or to the user, at step 3750. When the indication at step 3710 is for a back feature, the support application determines the previous resource (step 3740), and provides it to the supported application (which provides the resource to the user) or to the user, at step 3750.

Providing a forward feature may include receiving a user indication to return to a resource from which a back feature was performed (step 3760), determining the resource (step 3765), and providing the resource (step 3770) to the supported application or the user.

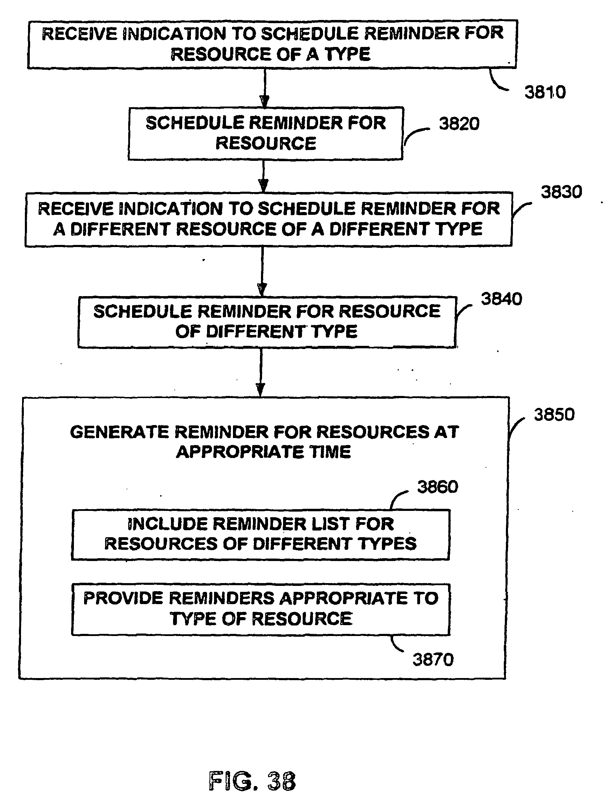

FIG. 38 is a flowchart of illustrative steps involved in providing an inter-resource reminder feature in accordance with one embodiment of the present invention. At step 3810, the support application receives an indication (from the supported application or the user) to schedule a reminder for a resource of a type, and schedules the reminder at step 3820. At step 3830, the support application receives an indication (from the supported application or the user) to schedule a reminder for a resource of a different type, and schedules the reminder for the resource at step 3840.

The reminder is generated at step 3850. The reminder may be generated by the support application, or the supported application. The reminder may include the resources of different types (step 3860) (i.e., as in a reminder list), and may be appropriate to the type of resource and event for which the reminder is generated (step 3870).

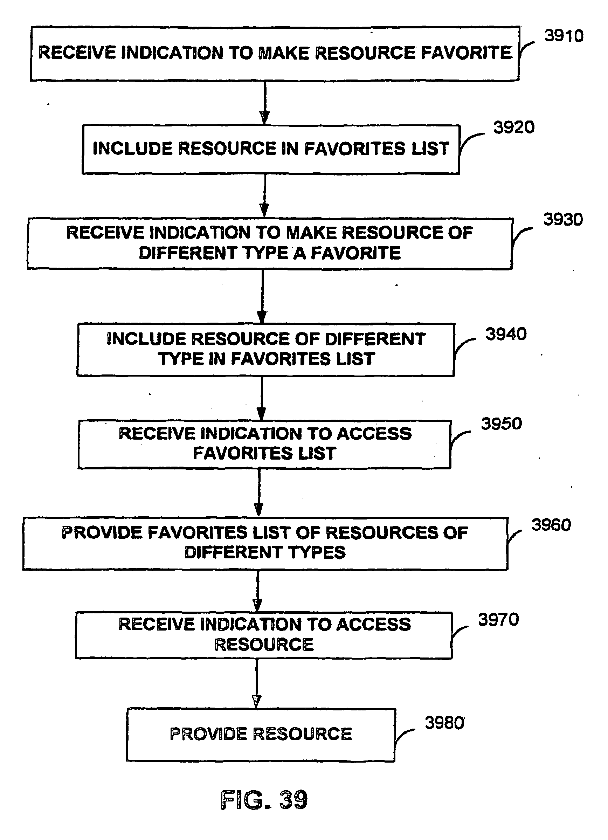

FIG. 39 is a flowchart of illustrative steps involved in providing an inter-resource favorites feature. At steps 3910 and 3930, the support application receives, from the supported application or the user, indications to make resources of different types favorites. At step 3920 and 3940, the resources are included in a favorites list by the support application or, in some embodiments, by the supported application. At step 3950, the support application receives an indication to access a favorites list and provides the list to the user, or the supported application, at step 3960. At step 3970, the support application receives an indication that the user desires to access a resource, and provides the resource to the supported application, or the user, at step 3980.

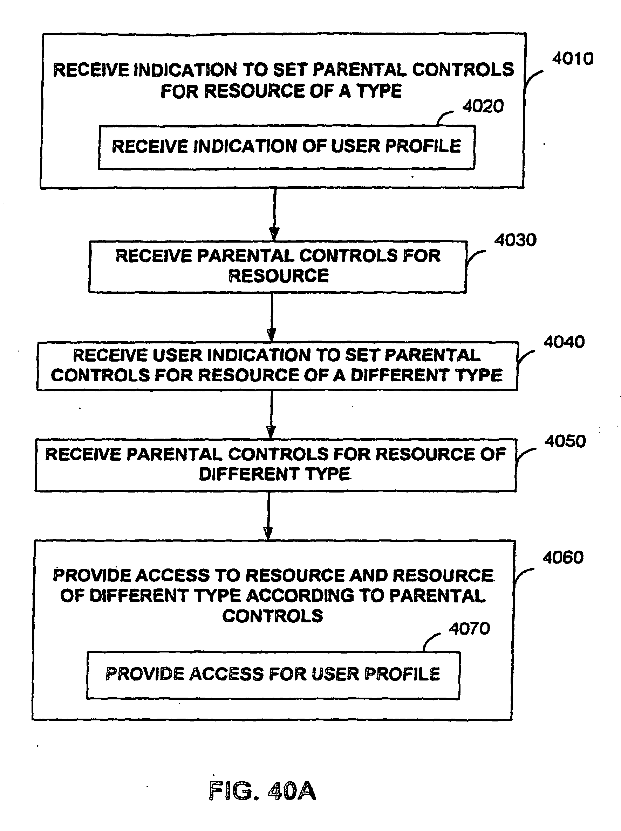

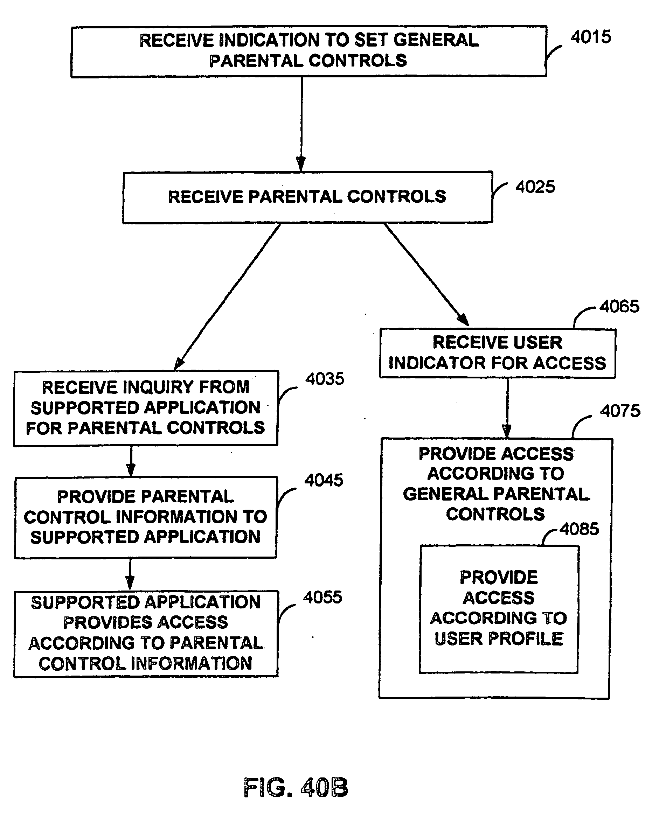

FIGS. 40a and 40b are flowcharts of illustrative steps involved in providing an inter-resource parental control feature in accordance with some embodiments of the present invention. At steps 4010 and 4050, the support application receives an indication to set parental controls for resources of different types. These steps may include receiving an indication of a user profile (e.g., step 4020). At steps 4030 and 4050, the support application receives, from the user or the supported application, the parental controls for the resources. At step 4060, the support application, or the supported application, provides access to the resources according to their respective parental controls. This may include providing access for the user profile as indicated at step 4020.

FIG. 40b shows illustrative steps involved in setting parental control settings used by a number of supported applications. The support application receives an indication to set general parental control settings, and the corresponding parental control settings, at steps 4015 and 4025, respectively. In some embodiments, the supported application may control access. For example, at step 4035 the support application receives an inquiry from the supported application for the general parental controls. The supported application may request these controls when, for example, it first starts, in response to a user attempting to access a resource, or in response to any other suitable event. At step 4045, the supported application provides the information to the supported application, and the supported application provides user access according to the parental control settings (step 4055).

In some embodiments, the support application controls user.access. For example at step 4065, the support application receives a user indication for access to a resource. This may be directly from the user or from a support application. At step 4075, the support application provides the user with access to the resource according to the general parental control settings. This may include providing access according to parental control for a particular user profile (step 4085).

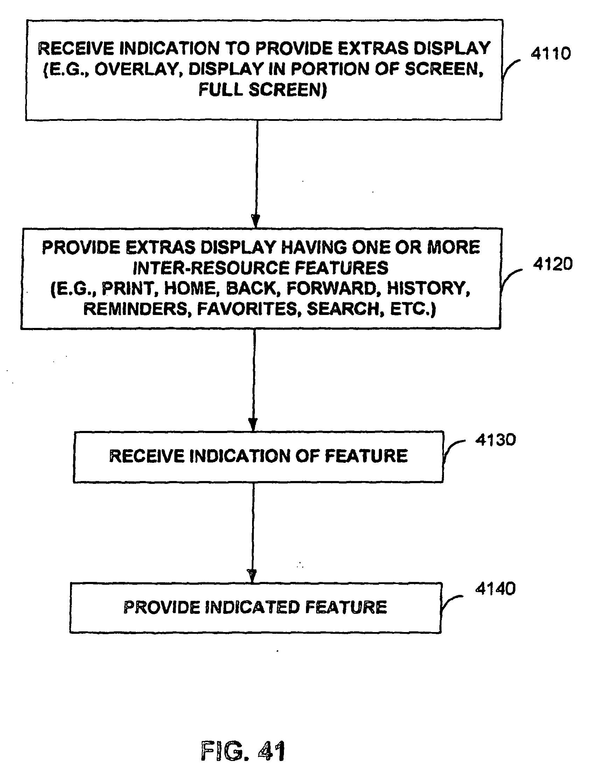

FIG. 41 is a flowchart of illustrative steps involved in providing an extras feature in accordance with one embodiment of the present invention. At step 4110, the support application receives, from the user or a supported application, an indication to provide an extras display. The extras display may be an overlay, partial display, or a full screen display. At step 4120, the support application provides the extras feature having one or more inter-resource features.
The extras feature may include, for example, print, home, back, forward, history, reminders, favorites, search or other suitable features. The support application receives an indication for one of the features, and provides the feature at step 4140.

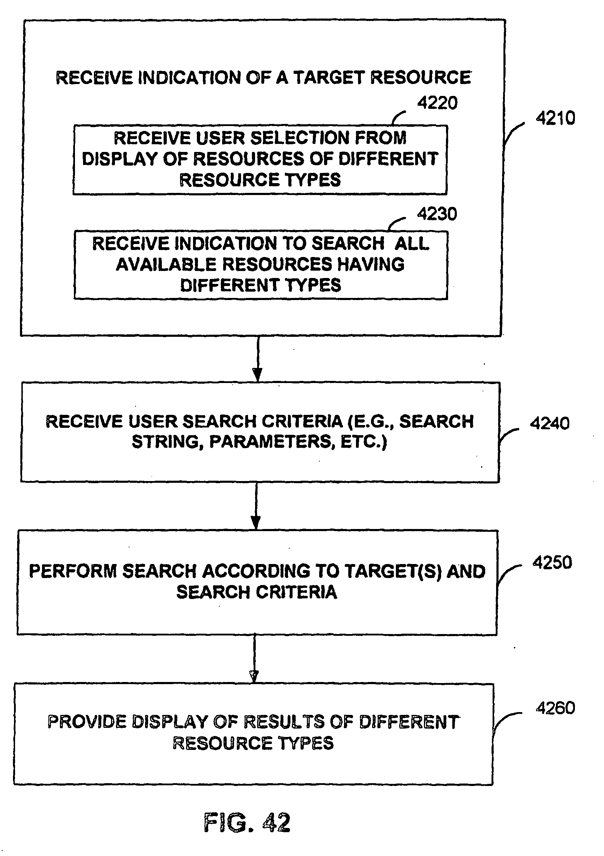

FIG. 42 is a flowchart of illustrative steps involved in providing an inter-resource search feature in accordance with one embodiment of the present invention. At step 4210, the support application receives an indication of a target resource. This may include receiving user selections (directly or from a support application) of resources from a display of one or more resources which may be of different types, or an indication to search all available sources (steps 4220 and 4230, respectively). At step 4240, the support application receives user search criteria, such as search strings, parameters, or any other suitable criteria. At step 4250, the support application performs the search of the target(s) according to the search criteria, and provides a display of the results at step 4260. The display may include resources of different types.

One skilled in the art will appreciate that the present invention can be practiced by other than the described embodiments, which are presented for purposes of illustration and not of limitation, and the present invention is limited only by the claims which follow.

## Claims

1. A method for providing inter-resource features in an interactive television program guide system, wherein the interactive television program guide is implemented at least in part on user television equipment and supports at least one supported application running at least in part on the user television equipment, comprising:
receiving with the interactive television program guide a first indication to perform an inter-resource feature for a first resource having a first type;
accessing with the interactive television program guide the first resource in response to the first indication;
storing a list of previously accessed resources of different types;
in response to receiving a second indication of a return feature, receiving with the interactive television program guide the second indication to return to a previously accessed resource of a second type, wherein the first and second types are different;
accessing with the interactive television program guide the previously accessed resource in the stored list in response to the second indication;
in response to receiving a further indication of the return feature, receiving with the interactive television program guide the further indication to return to another previously accessed resource of a third type, wherein the second and third types are different; and
accessing with the interactive television program guide said other previously accessed resource in the stored list according to a backup sequence in response to the further indication.

2. The method defined in claim 1 wherein:
receiving the first indication comprises receiving the first indication from a supported application; and
receiving the second indication comprises receiving the second indication from a supported application.

3. The method defined in claim 1 wherein:
receiving the first indication comprises receiving the first indication from a user input device; and
receiving the second indication comprises receiving the second indication from a user input device.

4. The method defined in claim 1 further comprising:
receiving with the interactive television program guide an indication to go forward to the first resource; and
providing with the interactive television program guide the first resource in response to the indication to go forward to the first resource.

5. The method defined in claim 1 further comprising:
receiving a first indication to access an inter-resource history feature;
receiving a second indication to access the inter-resource history feature;
providing a history list of a plurality of resources that includes the first resource in response to the first indication to access the inter-resource history feature; and
providing the history list of a plurality of resources that includes the previously accessed resource in response to the second indication to access the inter-resource history feature.

6. The method defined in claim 5 further comprising:
receiving an indication of a particular resource of the history list; and
providing the resource in response to the indication.

7. The method defined in claim 1 further comprising:
receiving an indication to schedule a reminder for the first resource;
providing a first reminder for the first resource;
receiving an indication to schedule a reminder for the previously accessed resource; and
providing a second reminder for the previously accessed resource.

8. The method defined in claim 7 wherein the first reminder for the first resource and the second reminder for the previously accessed resource are provided in a combined reminder list.

9. The method defined in claim 7 wherein:
providing the first reminder for the first resource comprises providing features in the first reminder based on the first type; and
providing the second reminder for the previously accessed resource comprises providing features in the second reminder based on the second type.

10. The method defined in claim 1 further comprising:
receiving an indication to make the first resource a favourite resource;
receiving an indication to make the previously accessed resource a favourite resource;
including the first resource in a favourites list; and
including the previously accessed resource in the favourites list.

11. The method defined in claim 10 further comprising providing an opportunity to select a resource from the favourites list and providing the first resource in response to a selection of the first resource from the favourites list.

12. The method defined in claim 1 further comprising:
receiving an indication to set parental controls for the first resource;
providing access to the first resource in accordance with the parental controls for the first resource;
receiving an indication to set parental controls for the previously accessed resource; and
providing access to the previously accessed resource in accordance with the parental controls for the previously accessed resource.

13. The method defined in claim 12 further comprising:
receiving an indication to set general parental controls;
receiving the general parental controls; and
providing access to the first and previously accessed resources in accordance with the general parental controls.

14. The method defined in claim 1 further comprising:
receiving an indication to provide an extras display;
providing the extras display in response to the indication, wherein the extras display includes one or more inter-resource features;
receiving an indication for an inter-resource feature of the one or more inter-resource features; and
providing the indicated inter-resource feature of the one or more inter-resource features.

15. The method defined in claim 1 further comprising:
receiving an indication to search resources;
receiving an indication of one or more target resources;
receiving user search criteria;
searching the one or more target resources according to the search criteria; and
providing the results of the search.

16. An interactive television program guide system for providing inter-resource features comprising:
user television equipment on which an interactive television program guide and one or more supported applications are at least partially implemented, wherein the interactive television program guide is configured to:
receive a first indication to perform an inter-resource feature for a first resource having a first type;
access the first resource in response to the first indication;
store a list of previously accessed resources of different types;
in response to receiving a second indication of a return feature, receive the second indication to return to a previously accessed resource of a second type, wherein the first and second types are different;
access the previously accessed resource in the stored list in response to the second indication;
in response to receiving a further indication of the return feature, receive the further indication to return to another previously accessed resource of a third type, wherein the second and third types are different; and
access said other previously accessed resource in the stored list according to a backup sequence in response to the further indication.

17. The system defined in claim 16 wherein the interactive television program guide is further configured to:
receive the first indication from a supported application; and
receive the second indication from a supported application.

18. The system defined in claim 16 wherein the interactive television program guide is further configured to:
receive the first indication from a user input device; and
receive the second indication from a user input device.

19. The system defined in claim 16 wherein the interactive television program guide is further configured to:
receive an indication to go forward to the first resource; and
provide the first resource in response to the indication to go forward to the first resource.

20. The system defined in claim 16 wherein:
the interactive television program guide is further configured to:
receive a first indication to access an inter-resource history feature;
receive a second indication to access the inter-resource history feature; and
provide a history list of a plurality of resources that includes the first resource and the previously accessed resource.

21. The system defined in claim 20 wherein the interactive television program guide is further configured to:
receive an indication of a particular resource of the history list; and
provide the resource in response to the indication.

22. The system defined in claim 16 wherein the interactive television program guide is further configured to:
receive an indication to schedule a reminder for the first resource;
provide a first reminder for the first resource;
receive an indication to schedule a reminder of the previously accessed resource; and
provide a second reminder for the previously accessed resource.

23. The system defined in claim 22 wherein the first reminder for the first resource and the second reminder for the previously accessed resource are provided in a combined reminder list.

24. The system defined in claim 22 wherein the interactive television program guide is further configured to:
provide features in the first reminder based on the first type; and
provide features in the second reminder based on the second type.

25. The system defined in claim 16 wherein the interactive television program guide is further configured to:
receive an indication to make the first resource a favourite resource;
receive an indication to make the previously accessed resource a favourite resource;
include the first resource in a favourites list; and
include the first resource in a favourites list; and
include the previously accessed resource in the favourites list.

26. The system defined in claim 25 wherein the interactive television program guide is further configured to provide an opportunity to select a resource from the favourites list and to provide the first resource in response to a selection of the first resource from the favourites list.

27. The system defined in claim 16 wherein the interactive television program guide is further configured to:
receive an indication to set parental controls for the first resource;
provide access to the first resource in accordance with the parental controls for the first resource;
receive an indication to set parental controls for the previously accessed resource; and
provide access to the previously accessed resource in accordance with the parental controls for the previously accessed resource.

28. The system defined in claim 27 wherein the interactive television program guide is further configured to:
receive an indication to set general parental controls;
receive the general parental controls; and
provide access to the first and previously accessed resources in accordance with the general parental controls.

29. The system defined in claim 16 wherein the interactive television program guide is further configured to:
receive an indication to provide an extras display;
provide the extras display in response to the indication, wherein the extras display includes one or more inter-resource features;
receive an indication for an inter-resource feature of the one or more inter-resource features; and
provide the indicated inter-resource feature of the one or more inter-resource features.

30. The system defined in claim 16 wherein the interactive television program guide is further configured to:
receive an indication to search resources;
receive an indication of one or more target resources;
receive user search criteria;
search the one or more target resources according to the search criteria; and
provide the results of the search.

31. The method defined in claim 1, wherein the inter-resource features are resource sensitive.

32. The method defined in claim 1 further comprising storing at least one list of resources accessed by a user; and wherein:
providing the first resource comprises selecting a list and providing the last accessed resource stored on the selected list; and
providing the previously accessed resource comprises selecting a list and providing the resource stored on the selected list accessed most recently before the first resource.

33. The method defined in claim 32 wherein storing at least one list of resources accessed comprises:
selecting at least one list to update when the user accesses a resource; and
updating the at least one selected list by storing the accessed resource.

34. The method defined in claim 1, wherein the interactive television program guide includes rules defining which resources a user can access with the inter-resources features.

35. The system defined in claim 16, wherein the inter-resource features are resource sensitive.

36. The system defined in claim 16, wherein the interactive television program guide is further configured to:
store at least one list of resources accessed by a user;
select a list and provide the last accessed resource stored on the selected list; and
select a list and provide the resource stored on the selected list accessed most recently before the first resource.

37. The system defined in claim 36, wherein the interactive television program guide is further configured to:
select at least one list to update when the user accessed a resource; and
update the at least one selected list by storing the accessed resource.

38. The system defined in claim 16, wherein the interactive television program guide includes rules defining which resources a user can access with the inter-resource features.

## Patentansprüche

1. Verfahren zum Bereitstellen von Inter-Ressource-Merkmalen in einem interaktiven Fernsehprogramm-Führungssystem, wobei die interaktive Fernsehprogramm-Führung zumindest teilweise an einem Benutzer-Fernsehgerät ausgeführt wird und mindestens eine unterstützte Anwendung unterstützt, die zumindest teilweise auf dem Benutzer-Fernsehgerät läuft, das aufweist:
Empfangen, mit der interaktiven Fernsehprogramm-Führung, einer ersten Anzeige, um ein Inter-Ressource-Merkmal für eine erste Ressource, die einen ersten Typ besitzt, durchzuführen;
Zugreifen mit der interaktiven Fernsehprogramm-Führung auf die erste Ressource in Abhängigkeit von der ersten Anzeige;
Speichern einer Liste von früher zugegriffenen Ressourcen von verschiedenen Typen;
in Abhängigkeit von dem Empfang einer zweiten Anzeige eines Rückwärts-Merkmals Empfangen, mit der interaktiven Fernsehprogramm-Führung, der zweiten Anzeige, um zu einer früher zugegriffenen Ressource eines zweiten Typs zurück zu gehen, wobei der erste und der zweite Typ unterschiedlich sind;
Zugreifen mit der interaktiven Fernsehprogramm-Führung auf die früher zugegriffene Ressource in der gespeicherten Liste in Abhängigkeit von der zweiten Anzeige;
in Abhängigkeit von einer weiteren Anzeige des Rückwärts-Merkmals Empfangen, mit der interaktiven Fernsehprogramm-Führung, der weiteren Anzeige, um zu einer weiteren früher zugegriffenen Ressource eines dritten Typs zurück zu kehren, wobei der zweite Typ und der dritte Typ verschieden sind; und
Zugreifen mit der interaktiven Fernsehprogramm-Führung auf die weitere früher zugegriffene Ressource in der gespeicherten Liste gemäß einer Backup-Sequenz in Abhängigkeit von der weiteren Anzeige.

2. Verfahren nach Anspruch 1, wobei
ein Empfangen der ersten Anzeige ein Empfangen der ersten Anzeige von einer unterstützten Anwendung aufweist, und
ein Empfangen der zweiten Anzeige ein Empfangen der zweiten Anzeige von einer unterstützten Anwendung aufweist.

3. Verfahren nach Anspruch 1, wobei
ein Empfangen der ersten Anzeige ein Empfangen der ersten Anzeige von einer Benutzereingabevorrichtung aufweist; und
ein Empfangen der zweiten Anzeige ein Empfangen der zweiten Anzeige von einer Benutzereingabevorrichtung aufweist.

4. Verfahren nach Anspruch 1, das weiterhin aufweist:
ein Empfangen, mit der interaktiven Fernsehprogramm-Führung, einer Anzeige, um weiter zu der ersten Ressource zu gehen; und
Bereitstellen, mit der interaktiven Fernsehprogramm-Führung, der ersten Ressource in Abhängigkeit der Anzeige, um weiter zu der ersten Ressource zu gehen.

5. Verfahren nach Anspruch 1, das weiterhin aufweist:
Empfangen einer ersten Anzeige, um auf ein Inter-Ressource-Historik-Merkmal zuzugreifen;
Empfangen einer zweiten Anzeige, um auf ein Inter-Ressource-Historik-Merkmal zuzugreifen;
Bereitstellen einer Historik-Liste einer Mehrzahl von Ressourcen, die die erste Ressource umfasst, in Abhängigkeit der ersten Anzeige, um auf ein Inter-Ressource-Historik-Merkmal zuzugreifen; und
Bereitstellen der Historik-Liste einer Mehrzahl von Ressourcen, die die früher zugegriffene Ressource umfasst, in Abhängigkeit der zweiten Anzeige, um auf ein Inter-Ressource-Historik-Merkmal zuzugreifen.

6. Verfahren nach Anspruch 5, das weiterhin aufweist:
Empfangen einer Anzeige einer bestimmten Ressource der Historik-Liste; und
Bereistellen der Ressource in Abhängigkeit der Anzeige.

7. Verfahren nach Anspruch 1, das weiterhin aufweist:
Empfangen einer Anzeige, um eine Erinnerung für die erste Ressource ablaufmäßig zu planen;
Bereistellen einer ersten Erinnerung für die erste Ressource;
Empfangen einer Anzeige, um eine Erinnerung für die früher zugegriffene Ressource ablaufmäßig zu planen; und
Bereitstellen einer zweiten Erinnerung für die früher zugegriffene Ressource.

8. Verfahren nach Anspruch 7, wobei die erste Erinnerung für die erste Ressource und die zweite Erinnerung für die früher zugegriffene Ressource in einer kombinierten Erinnerungsliste bereitgestellt werden.

9. Verfahren nach Anspruch 7, wobei
ein Bereistellen der ersten Erinnerung für die erste Ressource ein Bereitstellen von Merkmalen in der ersten Erinnerung basierend auf dem ersten Typ aufweist; und
ein Bereistellen der zweiten Erinnerung für die früher zugegriffene Ressource ein Bereitstellen von Merkmalen in der zweiten Erinnerung basierend auf dem zweiten Typ aufweist.

10. Verfahren nach Anspruch 1, das weiterhin aufweist:
Empfangen einer Anzeige, um die erste Ressource zu einer favorisierten Ressource zu machen;
Empfangen einer Anzeige, um die früher zugegriffene Ressource zu einer favorisierten Ressource zu machen; umfassend die erste Ressource in einer Favoriten-Liste; und umfassend die früher zugegriffene Ressource in der Favoriten-Liste.

11. Verfahren nach Anspruch 10, das weiterhin ein Bereistellen einer Gelegenheit, um eine Ressource von der Favoriten-Liste auszuwählen, und ein Bereitstellen der ersten Ressource in Abhängigkeit einer Auswahl der ersten Ressource von der Favoriten-Liste aufweist.

12. Verfahren nach Anspruch 1, das weiterhin aufweist:
Empfangen einer Anzeige, um elterliche Kontrollen für die erste Ressource einzustellen:
Bereistellen eines Zugriffs zu der ersten Ressource entsprechend den elterlichen Kontrollen für die erste Ressource;
Empfangen einer Anzeige, um elterliche Kontrollen für die früher zugegriffene Ressource einzustellen; und
Bereitstellen eines Zugriffs zu der früher zugegriffenen Ressource entsprechend den elterlichen Kontrollen für die früher zugegriffene Ressource.

13. Verfahren nach Anspruch 12, das weiterhin aufweist:
Empfangen einer Anzeige, um allgemeine, elterliche Kontrollen einzustellen;
Empfangen der allgemeinen, elterlichen Kontrollen; und
Bereitstellen eines Zugangs zu der ersten und der früher zugegriffenen Ressource entsprechend der allgemeinen, elterlichen Kontrollen.

14. Verfahren nach Anspruch 1, das weiterhin aufweist:
Empfangen einer Anzeige, um eine zusätzliche Anzeige bereitzustellen;
Bereitstellen der zusätzlichen Anzeige in Abhängigkeit von der Anzeige, wobei die zusätzliche Anzeige eine oder mehrere Inter-Ressource-Merkmal(e) umfasst;
Empfangen einer Anzeige für ein Inter-Ressource-Merkmal des einen oder von mehreren Inter-Ressource-Merkmalen; und
Bereitstellen des angezeigten Inter-Ressource-Merkmals des einen oder von mehreren Inter-Ressource-Merkmalen.

15. Verfahren nach Anspruch 1, das weiterhin aufweist:
Empfangen einer Anzeige, um Ressourcen zu suchen;
Empfangen einer Anzeige von einer oder mehreren Ziel-Ressourcen;
Empfangen von Benutzer-Suchkriterien;
Suchen der einen oder mehrerer Ziel-Ressourcen entsprechend den Suchkriterien; und
Bereitstellen der Ergebnisse der Suche.

16. Interaktives Fernsehprogamm-Führungssystem zum Bereistellen von Inter-Ressource-Merkmalen, das aufweist:
ein Benutzer-Fernsehgerät, auf dem eine interaktive Fernsehprogramm-Führung und eine oder mehrere unterstützte Anwendung(en) zumindest teilweise ausgeführt werden, wobei die interaktive Fernsehprogramm-Führung so konfiguriert ist,
um eine erste Anzeige zu empfangen, um ein Inter-Ressource-Merkmal für eine erste Ressource, die einen ersten Typ hat, durchzuführen;
um auf die erste Ressource in Abhängigkeit von der ersten Anzeige zuzugreifen;
um eine Liste von früher zugegriffenen Ressourcen verschiedener Typen zu speichern;
in Abhängigkeit von einer zweiten Anzeige eines Rückwärts-Merkmals die zweite Anzeige zu empfangen, um zu einer früher zugegriffenen Ressource eines zweiten Typs zurück zu gehen, wobei der erste und der zweite Typ verschieden sind;
um auf die früher zugegriffene Ressource in der gespeicherten Liste in Abhängigkeit von der zweiten Anzeige zuzugreifen;
in Abhängigkeit von dem Empfang einer weiteren Anzeige des Rückwärts-Merkmals die weitere Anzeige zu empfangen, um zu einer weiteren früher zugegriffenen Ressource eines dritten Typs zurück zu gehen; und
um auf die weitere früher zugegriffene Ressource in der gespeicherten Listen entsprechend einer Backup-Sequenz in Abhängigkeit von der weiteren Anzeige zuzugreifen.

17. System nach Anspruch 16, wobei die interaktive Fernsehprogramm-Führung weiterhin so konfiguriert ist,
um die erste Anzeige von einer unterstützten Anwendung zu empfangen; und um die zweite Anzeige von einer unterstützten Anwendung zu empfangen.

18. System nach Anspruch 16, wobei die interaktive Fernsehprogramm-Führung weiterhin so konfiguriert ist,
um die erste Anzeige von einer Benutzereingabevorrichtung zu empfangen; und um die zweite Anzeige von einer Benutzereingabevorrichtung zu empfangen.

19. System nach Anspruch 16, wobei die interaktive Fernsehprogramm-Führung weiterhin so konfiguriert ist,
um eine Anzeige zu empfangen, um weiter zu der ersten Ressource zu gehen; und
um die erste Ressource in Abhängigkeit der Anzeige, um zu der ersten Ressource zu gehen, bereitzustellen.

20. System nach Anspruch 16, wobei
die interaktive Fernsehprogramm-Führung weiterhin so konfiguriert ist, um einer erste Anzeige zu empfangen, um auf ein Inter-Ressource-Historik-Merkmal zuzugreifen;
um eine zweite Anzeige zu empfangen, um auf das Inter-Ressource-Hisktorik-Merkmal zuzugreifen; und
um eine Historik-Liste einer Mehrzahl von Ressourcen bereitzustellen, die die erste Ressource und die früher zugegriffene Ressource umfasst.

21. System nach Anspruch 20, wobei die interaktive Fernsehprogramm-Führung weiterhin so konfiguriert ist, um eine Anzeige einer bestimmten Ressource der Historik-Liste zu empfangen; und um die Ressource in Abhängigkeit der Anzeige bereitzustellen.

22. System nach Anspruch 16, wobei die interaktive Fernsehprogramm-Führung weiterhin so konfiguriert ist, um eine Anzeige zu empfangen, um eine Erinnerung für die erste Ressource ablaufmäßig zu planen;
um eine erste Erinnerung für die erste Ressource bereitzustellen;
um eine Anzeige zu empfangen, um eine Erinnerung für die früher zugegriffene Ressource ablaufmäßig zu planen; und
um eine zweite Erinnerung für die früher zugegriffene Ressource bereitzustellen.

23. System nach Anspruch 22, wobei die erste Erinnerung für die erste Ressource und die zweite Erinnerung für die früher zugegriffene Ressource in einer kombinierten Erinnerungsliste bereitgestellt werden.

24. System nach Anspruch 22, wobei die interaktive Fernsehprogramm-Führung weiterhin so konfiguriert ist,
um Merkmale in der ersten Erinnerung basierend auf dem ersten Typ bereitzustellen; und
um Merkmale in der zweiten Erinnerung basierend auf dem zweiten Typ bereitzustellen.

25. System nach Anspruch 16, wobei die interaktive Fernsehprogramm-Führung weiterhin so konfiguriert ist,
um eine Anzeige zu empfangen, die erste Ressource zu einer favorisierten Ressource zu machen;
um eine Anzeige zu empfangen, die früher zugegriffene Ressource zu einer favorisierten Ressource zu machen;
um die erste Ressource in eine Favoriten-Liste einzuschließen; und
um die früher zugegriffene Ressource in die Favoriten-Liste einzuschließen.

26. System nach Anspruch 25, wobei die interaktive Fernsehprogramm-Führung weiterhin so konfiguriert ist, um eine Gelegenheit bereitzustellen, im eine Ressource von der Favoriten-Liste auszuwählen, und um die erste Ressource in Abhängigkeit einer Auswahl der ersten Ressource von der Favoriten-Liste bereitzustellen.

27. System nach Anspruch 16, wobei die interaktive Fernsehprogramm-Führung weiterhin so konfiguriert ist,
um eine Anzeige zu empfangen, um elterliche Kontrollen für die erste Ressource einzustellen;
um einen Zugriff zu der ersten Ressource entsprechend den elterlichen Kontrollen für die erste Ressource bereitzustellen;
um eine Anzeige zu empfangen, um elterliche Kontrollen für die früher zugegriffene Ressource einzustellen; und
um einen Zugriff zu der früher zugegriffenen Ressource entsprechend den elterlichen Kontrollen für die früher zugegriffene Ressource bereitzustellen.

28. System nach Anspruch 27, wobei die interaktive Fernsehprogramm-Führung weiterhin so konfiguriert ist, um eine Anzeige zu empfangen, um allgemeine, elterliche Kontrollen einzustellen; um die allgemeinen, elterlichen Kontrollen zu empfangen; und
um einen Zugang zu der ersten und der früher zugegriffenen Ressource entsprechend den allgemeinen, elterlichen Kontrollen bereitzustellen.

29. System nach Anspruch 16, wobei die interaktive Fernsehprogramm-Führung weiterhin so konfiguriert ist,
um eine Anzeige zu empfangen, um eine gesonderte Anzeige bereitzustellen;
um die gesonderte Anzeige in Abhängigkeit der Anzeige bereitzustellen; wobei die gesonderte Anzeige ein oder mehrere Inter-Ressource-Merkmal(e) umfasst;
um eine Anzeige für ein Inter-Ressource-Merkmal des einen oder von mehreren Inter-Ressource-Merkmalen zu empfangen; und
um das angezeigte Inter-Ressource-Merkmal der einen oder von mehreren Inter-Ressource-Merkmalen bereitzustellen.

30. System nach Anspruch 16, wobei die interaktive Fernsehprogramm-Führung weiterhin so konfiguriert ist,
um eine Anzeige zu empfangen, um Ressourcen zu suchen;
um eine Anzeige von einer oder mehreren Ziel-Ressourcen zu empfangen;
um Benutzer-Suchkriterien zu empfangen;
um die eine oder mehrere Ziel-Ressource(n) entsprechend den Suchkriterien zu suchen; und
um die Ergebnisse der Suche bereitzustellen.

31. Verfahren nach Anspruch 1, wobei die Inter-Ressource-Merkmale ressourcesensitiv sind.

32. Verfahren nach Anspruch 1, das weiterhin ein Speichern mindestens einer Liste von Ressourcen, auf die durch einen Benutzer zugegriffen wird, aufweist, und wobei ein Bereitstellen der ersten Ressource das Auswählen einer Liste und das Bereitstellen der Ressource, auf die zuletzt zugegriffen ist, gespeichert in der ausgewählten Liste aufweist, und
ein Bereitstellen der früher zugegriffenen Ressource das Auswählen einer Liste und Bereitstellen der Ressource die auf der ausgewählten Liste gespeichert ist, auf die am kürzesten vor der ersten Ressource zugegriffen ist, aufweist.

33. Verfahren nach Anspruch 32, wobei ein Speichern mindestens einer Liste von Ressourcen, auf die zugegriffen ist, aufweist:
Auswählen mindestens einer Liste, um zu aktualisieren, wenn der Benutzer auf eine Ressource zugreift; und
Aktualisieren der mindestens einen ausgewählten Liste durch Speichern der Ressource, auf die zugegriffen ist.

34. Verfahren nach Anspruch 1, wobei die interaktive Fernsehprogramm-Führung Regeln umfasst, die definieren, auf welche Ressourcen ein Benutzer mit den Inter-Ressource-Merkmalen zugreifen kann.

35. Verfahren nach Anspruch 16, wobei die Inter-Ressource-Merkmale ressourcesensitiv sind.

36. System nach Anspruch 16, wobei die interaktive Fernsehprogramm-Führung weiterhin so konfiguriert ist,
um mindestens eine Liste von Ressourcen, auf die durch einen Benutzer zugegriffen ist, zu speichern;
um eine Liste auszuwählen und um die zuletzt zugegriffene Ressource, gespeichert in der ausgewählten Liste, bereitzustellen; und
um eine Liste auszuwählen und um die Ressource auf der gespeicherten Liste, auf die am kürzesten zuvor vor der ersten Ressource zugegriffen ist, bereitzustellen.

37. System nach Anspruch 36, wobei die interaktive Fernsehprogramm-Führung weiterhin so konfiguriert ist,
um mindestens eine Liste auszuwählen, um zu aktualisieren, als der Benutzer auf eine Ressource zugriff, und
um die mindestens eine ausgewählte Liste durch Speichern der Ressource, auf die zugegriffenen ist, zu aktualisieren.

38. System nach Anspruch 16, wobei die interaktive Fernsehprogramm-Führung Regeln umfasst, die definieren, auf welche Ressourcen ein Benutzer mit den Inter-Ressource-Merkmalen zugreifen kann.

## Revendications

1. Procédé destiné à fournir des fonctions entre ressources dans un système de guide de programmes de télévision interactif, dans lequel le guide de programmes de télévision interactif est mis en oeuvre au moins en partie sur un équipement de télévision d'utilisateur et supporte au moins une application supportée fonctionnant au moins en partie sur l'équipement de télévision d'utilisateur, consistant à :
recevoir avec le guide de programmes de télévision interactif une première indication pour exécuter une fonction entre ressources pour une première ressource ayant un premier type ;
accéder avec le guide de programmes de télévision interactif à la première ressource en réponse à la première indication ;
mémoriser une liste de ressources accédées précédemment de types différents ;
en réponse à la réception d'une deuxième indication d'une fonction de retour, recevoir avec le guide de programmes de télévision interactif la deuxième indication pour retourner à une autre ressource précédemment accédée d'un deuxième type, dans lequel les premier et deuxième types sont différents ;
accéder avec le guide de programmes de télévision interactif à la ressource accédée précédemment dans la liste mémorisée en réponse à la deuxième indication ;
en réponse à la réception d'une autre indication de la fonction de retour, recevoir avec le guide de programmes de télévision interactif l'autre indication pour retourner à une autre ressource accédée précédemment d'un troisième type, dans lequel les deuxième et troisième types sont différents ; et
accéder avec le guide de programmes de télévision interactif à ladite autre ressource accédée précédemment dans la liste mémorisée en fonction d'une séquence de sauvegarde en réponse à l'autre indication.

2. Procédé selon la revendication 1, dans lequel :
la réception de la première indication comprend la réception de la première indication depuis une application supportée ; et
la réception de la deuxième indication comprend la réception de la deuxième indication depuis une application supportée.

3. Procédé selon la revendication 1, dans lequel :
la réception de la première indication comprend la réception de la première indication depuis un dispositif d'entrée utilisateur ; et
la réception de la deuxième indication comprend la réception de la deuxième indication depuis un dispositif d'entrée utilisateur.

4. Procédé selon la revendication 1, consistant en outre à :
recevoir avec le guide de programmes de télévision interactif une indication pour avancer jusqu'à la première ressource ; et
fournir avec le guide de programmes de télévision interactif la première ressource en réponse à l'indication pour avancer jusqu'à la première ressource.

5. Procédé selon la revendication 1, consistant en outre à :
recevoir une première indication pour accéder à une fonction d'historique entre ressources ;
recevoir une deuxième indication pour accéder à une fonction d'historique entre ressources ;
fournir une liste d'historique d'une pluralité de ressources qui comprend la première ressource en réponse à la première indication pour accéder à la première fonction d'historique entre ressources ; et
fournir la liste d'historique d'une pluralité de ressources qui comprend la ressource accédée précédemment en réponse à la deuxième indication pour accéder à la fonction d'historique entre ressources.

6. Procédé selon la revendication 5 consistant en outre à :
recevoir une indication d'une ressource particulière de la liste d'historique ; et
fournir la ressource en réponse à l'indication.

7. Procédé selon la revendication 1 consistant en outre à :
recevoir une indication pour programmer un mémento pour la première ressource ;
fournir un premier mémento pour la première ressource ;
recevoir une indication pour programmer un mémento pour la ressource accédée précédemment ; et
fournir un deuxième mémento pour la ressource accédée précédemment.

8. Procédé selon la revendication 7, dans lequel le premier mémento pour la première ressource et le deuxième mémento pour la ressource accédée précédemment sont prévus dans une liste de mémentos combinée.

9. Procédé selon la revendication 7, dans lequel :
la fourniture du premier mémento pour la première ressource consiste à fournir des fonctions dans le premier mémento en se basant sur le premier type ; et
la fourniture du deuxième mémento pour la ressource accédée précédemment consiste à fournir des fonctions dans le deuxième mémento en se basant sur le deuxième type.

10. Procédé selon la revendication 1, consistant en outre à :
recevoir une indication pour faire de la première ressource une ressource préférée ;
recevoir une indication pour faire de la ressource accédée précédemment une ressource préférée ;
inclure la première ressource dans une liste de favoris ; et
inclure la ressource accédée précédemment dans la liste de favoris.

11. Procédé selon la revendication 10, offrant une opportunité de choisir une ressource dans la liste des favoris et fournissant la première ressource en réponse à un choix de la première ressource dans la liste des favoris.

12. Procédé selon la revendication 1, consistant en outre à :
recevoir une indication pour définir le contrôle parental pour la première ressource ;
permettre l'accès à la première ressource en fonction du contrôle parental pour la première ressource ;
recevoir une indication pour définir le contrôle parental pour la ressource accédée précédemment ; et
permettre l'accès à la ressource accédée précédemment en fonction du contrôle parental pour la ressource accédée précédemment.

13. Procédé selon la revendication 12, consistant en outre à :
recevoir une indication pour définir un contrôle parental général ;
recevoir le contrôle parental général ; et
permettre l'accès à la première ressource et à la ressource accédée précédemment en fonction du contrôle parental général.

14. Procédé selon la revendication 1 consistant en outre à :
recevoir une indication pour fournir un affichage supplémentaire ;
fournir l'affichage supplémentaire en réponse à l'indication, dans lequel l'affichage supplémentaire comprend une ou plusieurs fonction(s) entre ressources ;
recevoir une indication d'une fonction entre ressources de la ou de la pluralité de fonction(s) entre ressources ; et
fournir la fonction entre ressources indiquée de la ou de la pluralité de fonction(s) entre ressources ;

15. Procédé selon la revendication 1 consistant en outre à :
recevoir une indication pour rechercher des ressources ;
recevoir une indication d'une ou plusieurs ressources cibles ;
recevoir des critères de recherche utilisateur ;
rechercher la ressource ou la pluralité de ressources cibles en fonction des critères de recherche ; et
fournir les résultats de la recherche.

16. Système de guide de programmes de télévision interactif destiné à fournir des fonctions entre ressources comprenant :
un équipement de télévision utilisateur sur lequel un guide de programmes de télévision interactif et une ou plusieurs applications supportées sont au moins partiellement mis en oeuvre, dans lequel le guide de programmes de télévision interactif est configuré pour :
recevoir une première indication pour exécuter une fonction entre ressources pour une première ressource ayant un premier type ;
accéder à la première ressource en réponse à la première indication ;
mémoriser une liste de ressources accédées précédemment de types différents ;
en réponse à la réception d'une deuxième indication d'une fonction de retour, recevoir la deuxième indication pour retourner à une ressource accédée précédemment d'un deuxième type, dans lequel les premier et deuxième types sont différents ;
accéder à la ressource accédée précédemment dans la liste mémorisée en réponse à la deuxième indication ;
en réponse à la réception d'une autre indication de la fonction de retour, recevoir l'autre indication pour retourner à une autre ressource accédée précédemment d'un troisième type, dans lequel le deuxième et troisième types sont différents ; et
accéder à ladite autre ressource accédée précédemment dans la liste mémorisée en fonction de la séquence de sauvegarde en réponse à l'autre indication.

17. Système selon la revendication 16, dans lequel le guide de programmes de télévision interactif est configuré en outre pour :
recevoir la première indication d'une application supportée ; et
recevoir la deuxième indication d'une application supportée.

18. Système selon la revendication 16, dans lequel le guide de programmes de télévision interactif est configuré en outre pour :
recevoir la première indication d'un dispositif d'entrée utilisateur ; et
recevoir la deuxième indication d'un dispositif d'entrée utilisateur.

19. Système selon la revendication 16, dans lequel le guide de programmes de télévision interactif est configuré en outre pour :
recevoir une indication pour avancer jusqu'à la première ressource ; et
fournir la première ressource en réponse à l'indication pour avancer jusqu'à la première ressource.

20. Système selon la revendication 16 dans lequel :
le guide de programmes de télévision interactif est configuré en outre pour :
recevoir une première indication pour accéder à une fonction d'historique entre ressources ;
recevoir une deuxième indication pour accéder à la fonction d'historique entre ressources ; et
fournir une liste d'historique d'une pluralité de ressources qui comprend la première ressource et la ressource accédée précédemment.

21. Système selon la revendication 20, dans lequel le guide de programmes de télévision interactif est configuré en outre pour :
recevoir une indication d'une ressource particulière de la liste d'historique ; et
fournir la ressource en réponse à l'indication.

22. Système selon la revendication 16, dans lequel le guide de programmes de télévision interactif est configuré en outre pour :
recevoir une indication pour programmer un mémento pour la première ressource ;
fournir un premier mémento pour la première ressource ;
recevoir une indication pour programmer un mémento de la ressource accédée précédemment ; et
fournir un deuxième mémento pour la ressource accédée précédemment.

23. Système selon la revendication 22, dans lequel le premier mémento pour la première ressource et le deuxième mémento pour la ressource accédée précédemment sont prévus dans une liste de mémentos combinée.

24. Système selon la revendication 22, dans lequel le guide de programmes de télévision interactif est configuré en outre pour :
fournir des fonctions dans le premier mémento en se basant sur le premier type ; et
fournir des fonctions dans le deuxième mémento en se basant sur le deuxième type.

25. Système selon la revendication 16, dans lequel le guide de programmes de télévision interactif est configuré en outre pour :
recevoir une indication pour faire de la première ressource une ressource préférée ;
recevoir une indication pour faire de la ressource accédée précédemment une ressource préférée ;
inclure la première ressource dans une liste de favoris ; et
inclure la première ressource dans une liste de favoris ; et
inclure la ressource accédée précédemment dans la liste de favoris.

26. Système selon la revendication 25, dans lequel le guide de programmes de télévision interactif est configuré en outre pour offrir une opportunité de choisir une ressource à partir de la liste de favoris et de fournir la première ressource en réponse à un choix de la première ressource à partir de la liste de favoris.

27. Système selon la revendication 16, dans lequel le guide de programmes de télévision interactif est configuré en outre pour :
recevoir une indication pour définir le contrôle parental pour la première ressource ;
permettre l'accès à la première ressource en fonction du contrôle parental pour la première ressource ;
recevoir une indication pour définir le contrôle parental pour la ressource accédée précédemment ; et
permettre l'accès à la ressource accédée précédemment en fonction du contrôle parental pour la ressource accédée précédemment.

28. Système selon la revendication 27, dans lequel le guide de programmes de télévision interactif est configuré en outre pour :
recevoir une indication pour définir un contrôle parental général ;
recevoir le contrôle parental général ; et
permettre l'accès à la première ressource et aux ressources accédées précédemment en fonction du contrôle parental général.

29. Système selon la revendication 16, dans lequel le guide de programmes de télévision interactif est configuré en outre pour :
recevoir une indication pour fournir un affichage supplémentaire ;
fournir l'affichage supplémentaire en réponse à l'indication, dans lequel l'affichage supplémentaire comprend une ou plusieurs fonction(s) entre ressources ;
recevoir une indication pour une fonction entre ressources de la ou de la pluralité de fonction(s) entre ressources ; et
fournir la fonction entre ressources indiquée de la ou de la pluralité de fonction(s) entre ressources.

30. Système selon la revendication 16, dans lequel le guide de programmes de télévision interactif est configuré en outre pour :
recevoir une indication pour rechercher des ressources ;
recevoir une indication d'une ou plusieurs ressources cibles ;
recevoir des critères de recherche d'utilisateur ;
rechercher la ressource ou la pluralité de ressources cibles en fonction des critères de recherche ; et
fournir les résultats de la recherche.

31. Procédé selon la revendication 1, dans lequel les fonctions entre ressources sont sensibles aux ressources.

32. Procédé selon la revendication 1, consistant en outre à mémoriser au moins une liste de ressources accédées par un utilisateur ; et dans lequel :
la fourniture de la première ressource consiste à choisir une liste et à fournir la dernière ressource accédée mémorisée sur la liste choisie ; et
la fourniture de la ressource accédée précédemment consiste à choisir une liste et à fournir la ressource mémorisée sur la liste choisie accédée le plus récemment avant la première ressource.

33. Procédé selon la revendication 32, dans lequel la mémorisation d'au moins une liste de ressources accédées consiste à :
choisir au moins une liste à mettre à jour dès que l'utilisateur accède à une ressource ; et
mettre à jour l'au moins une liste choisie en mémorisant la ressource accédée.

34. Procédé selon la revendication 1, dans lequel le guide de programmes de télévision interactif comprend des règles définissant les ressources auxquelles un utilisateur peut accéder avec les fonctions entre ressources.

35. Système selon la revendication 16, dans lequel les fonctions entre ressources sont sensibles aux ressources.

36. Système selon la revendication 16, dans lequel le guide de programmes de télévision interactif est configuré en outre pour :
mémoriser au moins une liste de ressources accédées par un utilisateur ;
choisir une liste et fournir la dernière ressource accédée mémorisée sur la liste choisie ; et
choisir une liste et fournir la ressource mémorisée sur la liste choisie accédée le plus récemment avant la première ressource.

37. Système selon la revendication 36, dans lequel le guide de programmes de télévision interactif est configuré en outre pour :
choisir au moins une liste à mettre à jour dès que l'utilisateur a accédé à une ressource ; et
mettre à jour l'au moins une liste choisie en mémorisant la ressource accédée.

38. Système selon la revendication 16, dans lequel le guide de programmes de télévision interactif comprend des règles définissant les ressources auxquelles un utilisateur peut accéder avec les fonctions entre ressources.
